(19) **Europäisches Patentamt / European Patent Office / Office européen des brevets**

(11) **EP 4 510 752 A2**

(12) **EUROPEAN PATENT APPLICATION**

(43) Date of publication:
**19.02.2025   Bulletin 2025/08**

(21) Application number: **24206703.1**

(22) Date of filing: **06.07.2020**

(51) International Patent Classification (IPC):
**H04W 72/566** (2023.01)

(52) Cooperative Patent Classification (CPC):
**H04L 5/0053; H04W 72/569**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2019   EP 19189230**

(62) Document number(s) of the earlier application(s) in accordance with Art. 76 EPC:
**20735431.7 / 4 005 130**

(71) Applicants:
• **Sony Group Corporation**
  **Tokyo 108-0075 (JP)**
• **Sony Europe B.V.**
  **Weybridge, Surrey KT13 0XW (GB)**
  Designated Contracting States:
  **AL**

(72) Inventors:
• **WONG, Shin Horng**
  **Basingstoke, RG22 4SB (GB)**
• **BEALE, Martin Warwick**
  **Basingstoke, RG22 4SB (GB)**
• **SHIMEZAWA, Kazuyuki**
  **Basingstoke, RG22 4SB (GB)**
• **AWAD, Yassin Aden**
  **Basingstoke, RG22 4SB (GB)**

(74) Representative: **D Young & Co LLP**
**3 Noble Street**
**London EC2V 7BQ (GB)**

Remarks:
•This application was filed on 15.10.2024 as a divisional application to the application mentioned under INID code 62.
•Claims filed after the date of receipt of the divisional application (Rule 68(4) EPC).

(54) **TELECOMMUNICATIONS APPARATUS AND METHODS FOR PRIORITISED MULTIPLEXING OF UPLINK CONTROL INFORMATION**

(57)     A method of operating a terminal device in a wireless telecommunications system, the method comprising: determining first uplink control information should be transmitted using a first set of radio resources; determining the first uplink control information is associated with a first priority level; determining second uplink control information should be transmitted using a second set of radio resources; determining the second uplink control information is associated with a second priority level; determining if there is an overlap between the first and second sets of radio resources, and, in response to determining there is an overlap between the first and second sets of radio resources, selectively multiplexing the first uplink control information and the second uplink control information by taking account of their respective priority levels; selecting a set of radio resources to use for transmitting the selectively multiplexed first uplink control information and the second uplink control information; and transmitting the selectively multiplexed first uplink control information and the second uplink control information using the selected set of radio resources.

S1 — determine first uplink control information should be transmitted using a first set of radio resources

S2 — determine the first uplink control information is associated with a first priority level

S3 — determine second uplink control information should be transmitted using a second set of radio resources

S4 — determine the second uplink control information is associated with a second priority level

S5 — determine if there is an overlap between the first and second sets of radio resources, and, in response to determining there is an overlap between the first and second sets of radio resources, selectively multiplex the first uplink control information and the second uplink control information by taking account of their respective priority levels

S6 — select a set of radio resources to use for transmitting the selectively multiplexed first uplink control information and the second uplink control information

S7 — transmit the selectively multiplexed first uplink control information and the second uplink control information using the selected set of radio resources

FIG. 19

Description

BACKGROUND

**Field**

The present disclosure relates to wireless telecommunications apparatus and methods.

**Description of Related Art**

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Latest generation mobile telecommunication systems, such as those based on the 3GPP defined UMTS and Long Term Evolution (LTE) architecture, are able to support a wider range of services than simple voice and messaging services offered by previous generations of mobile telecommunication systems. For example, with the improved radio interface and enhanced data rates provided by LTE systems, a user is able to enjoy high data rate applications such as mobile video streaming and mobile video conferencing that would previously only have been available via a fixed line data connection. The demand to deploy such networks is therefore strong and the coverage area of these networks, i.e. geographic locations where access to the networks is possible, is expected to continue to increase rapidly.

Future wireless communications networks will be expected to efficiently support communications with an ever-increasing range of devices and data traffic profiles than existing systems are optimised to support. For example it is expected future wireless communications networks will be expected to efficiently support communications with devices including reduced complexity devices, machine type communication devices, high resolution video displays, virtual reality headsets and so on. Some of these different types of devices may be deployed in very large numbers, for example low complexity devices for supporting the "The Internet of Things", and may typically be associated with the transmissions of relatively small amounts of data with relatively high latency tolerance. Other types of device, for example supporting high-definition video streaming, may be associated with transmissions of relatively large amounts of data with relatively low latency tolerance. Other types of device, for example used for autonomous vehicle communications and for other critical applications, may be characterised by data that should be transmitted through the network with low latency and high reliability. A single device type might also be associated with different traffic profiles / characteristics depending on the application(s) it is running. For example, different consideration may apply for efficiently supporting data exchange with a smartphone when it is running a video streaming application (high downlink data) as compared to when it is running an Internet browsing application (sporadic uplink and downlink data) or being used for voice communications by an emergency responder in an emergency scenario (data subject to stringent reliability and latency requirements).

In view of this there is expected to be a desire for future wireless communications networks, for example those which may be referred to as 5G or new radio (NR) systems / new radio access technology (RAT) systems, as well as future iterations / releases of existing systems, to efficiently support connectivity for a wide range of devices associated with different applications and different characteristic data traffic profiles and requirements.

Example use cases currently considered to be of interest for next and latest generation wireless communication systems include so-called Ultra Reliable and Low Latency Communications (URLLC) / enhanced Ultra Reliable and Low Latency Communications (eURLLC) and Enhanced Mobile Broadband (eMBB). See, for example, the 3GPP documents RP-160671, "New SID Proposal: Study on New Radio Access Technology," NTT DOCOMO, RAN#71 [1]; RP-172834, "Work Item on New Radio (NR) Access Technology," NTT DOCOMO, RAN#78 [2]; RP-182089, "New SID on Physical Layer Enhancements for NR Ultra-Reliable and Low Latency Communication (URLLC)," Huawei, HiSilicon, Nokia, Nokia Shanghai Bell, RAN#81 [3]; and RP-190654, "Physical layer enhancements for NR ultra-reliable and low latency communication (URLLC)," Huawei, HiSilicon, RAN#89, Shenzhen, China, 18 to 21 March 2019 [4].

URLLC services are low latency and high reliability services (e.g. to support applications such as factory automation, transport industry, electrical power distribution etc.). URLLC services might, for example, aim to transmit data through a radio network with a target 32-byte packet transit time (i.e. time from ingress of a layer 2 packet to its egress from the network) of 1 ms (i.e. so that each packet needs to be scheduled and transmitted across the physical layer in a time that is shorter than 1 ms) with 99.999% reliability within the 1 ms target packet transit time, and there are recent proposals for this to be increased to 99.9999% with a latency between 0.5 ms and 1 ms.

eMBB services, on the other hand, may be typically characterised as high capacity services, for example, supporting up to 20 Gb / s, which have relatively low priority and relatively low reliability requirements compared to URLLC services.

The inventors have recognized the desire to efficiently support transmissions with differing priorities and reliability requirements, such as for URLLC and eMBB data, in wireless telecommunications systems gives rise to new challenges that need to be addressed to help optimise the operation of wireless telecommunications systems.

## SUMMARY

The present disclosure can help address or mitigate at least some of the issues discussed above.

Respective aspects and features of the present disclosure are defined in the appended claims.

It is to be understood that both the foregoing general description and the following detailed description are exemplary, but are not restrictive, of the present technology. The described embodiments, together with further advantages, will be best understood by reference to the following detailed description taken in conjunction with the accompanying drawings.

## BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings wherein like reference numerals designate identical or corresponding parts throughout the several views, and wherein:

Figure 1 schematically represents some aspects of an LTE-type wireless telecommunication network which may be configured to operate in accordance with certain embodiments of the present disclosure;

Figure 2 schematically represents some aspects of a new radio access technology (RAT) wireless telecommunications network which may be configured to operate in accordance with certain embodiments of the present disclosure;

Figure 3 shows a schematic representation of a telecommunications system in accordance with certain embodiments of the present disclosure;

Figure 4 schematically represents four potential PUCCH Resource Sets;

Figure 5 schematically represents example mappings from logical channel identifiers to PUCCH resource identifiers;

Figure 6 schematically shows an example of radio resources associated with a terminal device in an uplink radio resource grid (top half of figure) and downlink radio resource grid;

Figure 7 schematically represents a selection of a PUCCH resource identifier;

Figure 8 schematically represents example mappings from scheduling request identifiers to indices in a Scheduling Request Indication Lookup (SILT) table;

Figures 9 to 17 schematically show examples of radio resources associated with a terminal device in an uplink radio resource grid;

Figure 18 schematically represents example mappings from scheduling request identifiers to indices in a reduced size SILT table; and

Figure 19 is a flow diagram schematically representing some operating aspects of a terminal device in accordance with certain embodiments of the disclosure.

## DETAILED DESCRIPTION OF THE EMBODIMENTS

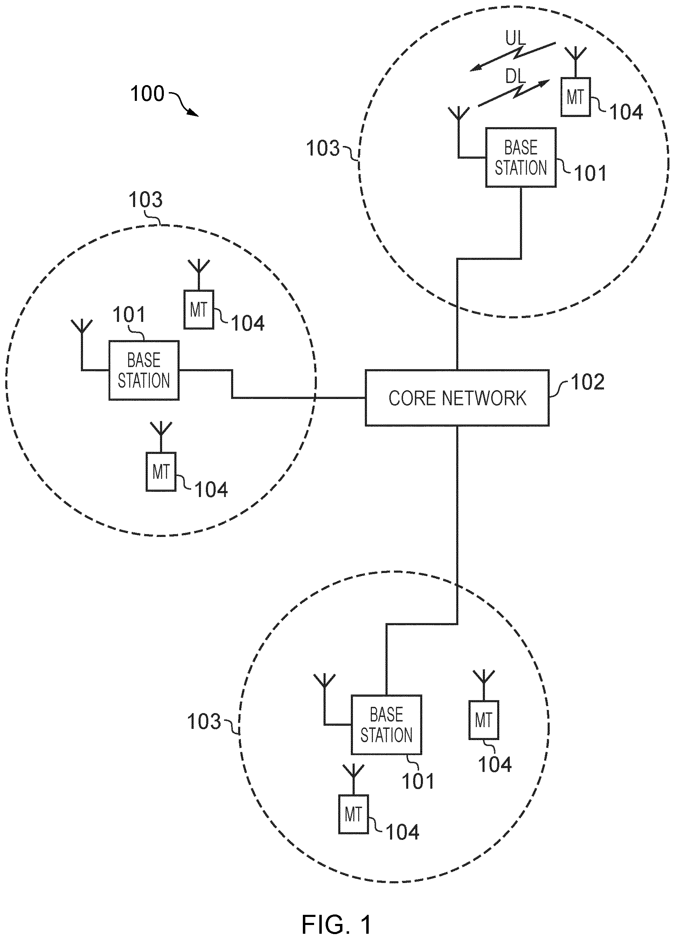

Figure 1 provides a schematic diagram illustrating some basic functionality of a mobile telecommunications network / system 100 operating generally in accordance with LTE principles, but which may also support other radio access technologies, and which may be adapted to implement embodiments of the disclosure as described herein. Various elements of Figure 1 and certain aspects of their respective modes of operation are well-known and defined in the relevant standards administered by the 3GPP (RTM) body and associated proposals, and also described in many books on the subject, for example, Holma H. and Toskala A [5]. It will be appreciated that operational aspects of the telecommunications networks discussed herein which are not specifically described (for example in relation to specific communication protocols and physical channels for communicating between different elements) may be implemented in accordance with any known techniques, for example according to the relevant standards and known proposed modifications and additions to the relevant standards.

The network 100 includes a plurality of base stations 101 connected to a core network 102. Each base station provides a coverage area 103 within which data can be communicated to and from terminal devices 104. Data is transmitted from base stations 101 to terminal devices 104 within their respective coverage areas 103 via a radio downlink. The coverage area may be referred to as a cell. Data is transmitted from terminal devices 104 to the base stations 101 via a radio uplink. The core network 102 routes data to and from the terminal devices 104 via the respective base stations 101 and provides functions such as authentication, mobility management, charging and so on. Terminal devices may also be referred to as mobile stations, user equipment (UE), user terminal, mobile radio, communications device, and so forth. Base stations, which are an example of network infrastructure equipment / network access node, may also be referred to as transceiver stations / nodeBs / e-nodeBs, g-nodeBs and so forth. In this regard different terminology is often associated with different generations of wireless telecommunications systems for elements providing broadly comparable functionality. However, certain embodiments of the disclosure may be equally implemented in different generations of wireless telecommunications systems, and for simplicity certain terminology may be used regardless of the underlying network architecture. That is to say, the use of a specific term in relation to certain example implementations is not intended to indicate these implementations are limited to a certain generation of network that may be most associated with that particular terminology.

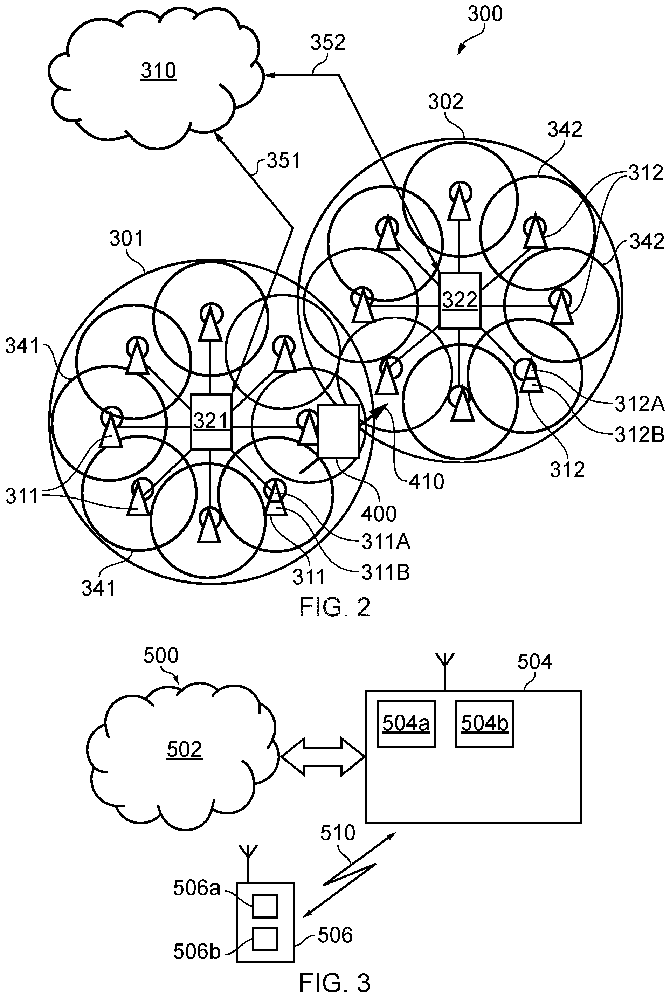

Figure 2 is a schematic diagram illustrating a network architecture for a new RAT wireless mobile telecommunications network / system 300 based on previously proposed approaches which may also be adapted to provide functionality in accordance with embodiments of the disclosure described herein. The new RAT network 300 represented in Figure 2 comprises a first communication cell 301 and a second communication cell 302. Each communication cell 301, 302, comprises a controlling node (centralised unit) 321, 322 in communication with a core network component 310 over a respective wired or wireless link 351, 352. The respective controlling nodes 321, 322 are also each in communication with a plurality of distributed units (radio access nodes / remote transmission and reception points (TRPs)) 311, 312 in their respective cells. Again, these communications may be over respective wired or wireless links.

The distributed units 311, 312 are responsible for providing the radio access interface for terminal devices connected to the network. Each distributed unit 311, 312 has a coverage area (radio access footprint) 341, 342 which together define the coverage of the respective communication cells 301, 302. Each distributed unit 311, 312 includes transceiver circuitry 311a, 312a for transmission and reception of wireless signals and processor circuitry 311b, 312b configured to control the respective distributed units 311, 312.

In terms of broad top-level functionality, the core network component 310 of the telecommunications system represented in Figure 2 may be broadly considered to correspond with the core network 102 represented in Figure 1, and the respective controlling nodes 321, 322 and their associated distributed units / TRPs 311, 312 may be broadly considered to provide functionality corresponding to base stations of Figure 1. The term network infrastructure equipment / access node may be used to encompass these elements and more conventional base station type elements of wireless telecommunications systems. Depending on the application at hand the responsibility for scheduling transmissions which are scheduled on the radio interface between the respective distributed units and the terminal devices may lie with the controlling node / centralised unit and / or the distributed units / TRPs.

A terminal device 400 is represented in Figure 2 within the coverage area of the first communication cell 301. This terminal device 400 may thus exchange signalling with the first controlling node 321 in the first communication cell via one of the distributed units 311 associated with the first communication cell 301. In some cases communications for a given terminal device are routed through only one of the distributed units, but it will be appreciated in some other implementations communications associated with a given terminal device may be routed through more than one distributed unit, for example in a soft handover scenario and other scenarios. The particular distributed unit(s) through which a terminal device is currently connected through to the associated controlling node may be referred to as active distributed units for the terminal device. Thus the active subset of distributed units for a terminal device may comprise one or more than one distributed unit (TRP). The controlling node 321 is responsible for determining which of the distributed units 311 spanning the first communication cell 301 is responsible for radio communications with the terminal device 400 at any given time (i.e. which of the distributed units are currently active distributed units for the terminal device). Typically this will be based on measurements of radio channel conditions between the terminal device 400 and respective ones of the distributed units 311. In this regard, it will be appreciated the subset of the distributed units in a cell which are currently active for a terminal device will depend, at least in part, on the location of the terminal device within the cell (since this contributes significantly to the radio channel conditions that exist between the terminal device and respective ones of the distributed units).

In at least some implementations the involvement of the distributed units in routing communications from the terminal device to a controlling node (controlling unit) is transparent to the terminal device 400. That is to say, in some cases the terminal device may not be aware of which distributed unit is responsible for routing communications between the terminal device 400 and the controlling node 321 of the communication cell 301 in which the terminal device is currently operating. In such cases, as far as the terminal device is concerned, it simply transmits uplink data to the controlling node 321 and receives downlink data from the controlling node 321 and the terminal device has no awareness of the involvement of the distributed units 311. However, in other embodiments, a terminal device may be aware of which distributed unit(s) are involved in its communications. Switching and scheduling of the one or more distributed units may be done at the network controlling node based on measurements by the distributed units of the terminal device uplink signal or measurements taken by the terminal device and reported to the controlling node via one or more distributed units

In the example of Figure 2, two communication cells 301, 302 and one terminal device 400 are shown for simplicity, but it will of course be appreciated that in practice the system may comprise a larger number of communication cells (each supported by a respective controlling node and plurality of distributed units) serving a larger number of terminal devices.

It will further be appreciated that Figure 2 represents merely one example of a proposed architecture for a new RAT telecommunications system in which approaches in accordance with the principles described herein may be adopted, and the functionality disclosed herein may also be applied in respect of wireless telecommunications systems having different architectures.

Thus certain embodiments of the disclosure as discussed herein may be implemented in wireless telecommunication systems / networks according to various different architectures, such as the example architectures shown in Figures 1 and 2, and indeed in networks supporting aspects of different architectures in parallel, for example with co-existence of a legacy radio access network architecture, e.g., as schematically represented in Figure 1, with a new RAT architecture, e.g., as schematically represented in Figure 2. It will be appreciated the specific wireless telecommunications architecture in any given implementation is not of primary significance to the principles described herein. In this regard, certain embodiments of the disclosure may be described generally in the context of communications between network infrastructure equipment / access nodes and terminal devices, wherein the specific nature of the network infrastructure equipment / access nodes and terminal devices will depend on the specific network infrastructure for the implementation at hand. For example, in some scenarios the network infrastructure equipment / access nodes may comprise base stations, such as LTE-type base stations 101 as shown in Figure 1, which are adapted to provide functionality in accordance with the principles described herein, and in other examples the network infrastructure equipment may comprise control units / controlling nodes 321, 322 and / or TRPs 311, 312 of the kind shown in Figure 2 which are adapted to provide functionality in accordance with the principles described herein, and in yet other scenarios the network infrastructure equipment / access nodes may comprise both base stations, such as LTE-type base stations 101 as shown in Figure 1 and control units / controlling nodes 321, 322 and / or TRPs 311, 312 of the kind shown in Figure 2 with at least one being adapted to provide functionality in accordance with the principles described herein.

As discussed above, mobile communications networks such as the network 100 shown in Figure 1 and the network 300 shown in Figure 2 may support services with different characteristics, including services for which reliability, i.e. ensuring a high chance data can be successfully transmitted through the network, is a primary consideration, e.g., for URLLC. Certain embodiments of the disclosure propose approaches that seek to help support the reliability of transmissions in a communications networks and may in particular be described in the context of URLLC data (including eURLLC data), but it will be appreciated that while the more stringent requirements associated with new types of data in wireless telecommunications systems may be seen as a driver for improving reliability, an improvement in reliability can be beneficial for any type of data for transmission in wireless telecommunications systems, whether classified as URLLC or similar data or otherwise.

Figure 3 schematically shows some further details of a telecommunications system 500 supporting communications between a radio access node 504 and a terminal device 506 according to certain embodiments of the present disclosure. For the sake of an example, the telecommunications system 500 here is assumed to be based broadly around an LTE-type architecture that may also support other radio access technologies, either using the same hardware as represented in Figure 3 with appropriately configured functionality, or separate hardware configured to operate in association with the hardware represented in Figure 3. However, the specific network architecture in which embodiments of the disclosure may be implemented is not of primary significance to the principles described herein. Many aspects of the operation of the telecommunications system / network 500 are known and understood and are not described here in detail in the interest of brevity. Operational aspects of the telecommunications system 500 which are not specifically described herein may be implemented in accordance with any known techniques, for example according to the current wireless telecommunications systems standards and other proposals for operating wireless telecommunications systems. The network access node 504 may, for convenience, sometimes be referred to herein as a base station 504, it being understood this term is used for simplicity and is not intended to imply any network access node should conform to any specific network architecture, but on the contrary, may correspond with any network infrastructure equipment / network access node that may be configured to provide functionality as described herein. In that sense it will appreciated the specific network architecture in which embodiments of the disclosure may be implemented is not of primary significance to the principles described herein.

The telecommunications system 500 comprises a core network part 502 coupled to a radio network part. The radio network part comprises the radio network access node 504 and the terminal device 506. It will of course be appreciated that in practice the radio network part may comprise more network access nodes serving multiple terminal devices across various communication cells (e.g. as schematically represented in Figure 1). However, only one network access node and one terminal device are shown in Figure 3 in the interests of simplicity.

The terminal device 506 is arranged to communicate data to and from the network access node (base station / transceiver station) 504 or another network access node in the wireless telecommunications system according to coverage. The network access node 504 is communicatively connected to the core network part 502 which is arranged to perform routing and management of mobile communications services for terminal devices in the telecommunications system 500 via the network access node 504. The connection from the network access nodes 504 to the core network 502 may be wired or wireless. In order to maintain mobility management and connectivity, the core network part 502 also includes a mobility management entity, MME, which manages the service connections with terminal devices operating in the communications system, such as the terminal device 506. As noted above, the operation of the various elements of the communications system 500 shown in Figure 3 may be in accordance with known techniques apart from where modified to provide functionality in accordance with embodiments of the present disclosure as discussed herein.

The terminal device 506 is adapted to support operations in accordance with embodiments of the present disclosure as discussed herein.

The terminal device 506 comprises transceiver circuitry 506a (which may also be referred to as a transceiver / transceiver unit) for transmission and reception of wireless signals and processor circuitry 506b (which may also be referred to as a processor / processor unit) configured to control the terminal device 506. The processor circuitry 506b may comprise various sub-units / sub-circuits for providing desired functionality as explained further herein. These sub-units may be implemented as discrete hardware elements or as appropriately configured functions of the processor circuitry. Thus the processor circuitry 506b may comprise circuitry which is suitably configured / programmed to provide the desired functionality described herein using conventional programming / configuration techniques for equipment in wireless telecommunications systems. The transceiver circuitry 506a and the processor circuitry 506b are schematically shown in Figure 3 as separate elements for ease of representation. However, it will be appreciated that the functionality of these circuitry elements can be provided in various different ways, for example using one or more suitably programmed programmable computer(s), or one or more suitably configured application-specific integrated circuit(s) / circuitry / chip(s) / chipset(s). It will be appreciated the terminal device 506 will in general comprise various other elements associated with its operating functionality, for example a power source, user interface, and so forth, but these are not shown in Figure 3 in the interests of simplicity.

The network access node 504 comprises transceiver circuitry 504a (which may also be referred to as a transceiver / transceiver unit) for transmission and reception of wireless signals and processor circuitry 504b (which may also be referred to as a processor / processor unit) configured to control the respective network access node 504 to operate in accordance with embodiments of the present disclosure as described herein. Thus, the processor circuitry 504b for the network access node 504 may comprise circuitry which is suitably configured / programmed to provide the desired functionality described herein using conventional programming / configuration techniques for equipment in wireless telecommunications systems. The transceiver circuitry 504a and the processor circuitry 504b are schematically shown in Figure 3 as separate elements for ease of representation. However, it will be appreciated that the functionality of these circuitry elements can be provided in various different ways, for example using one or more suitably programmed programmable computer(s), or one or more suitably configured application-specific integrated circuit(s) / circuitry / chip(s) / chipset(s). It will be appreciated the network access node 504 will in general comprise various other elements associated with its operating functionality, such as a scheduler.

Thus, the network access node 504 is configured to communicate data with a terminal device 506 according to an embodiment of the disclosure over communication link 510.

Certain embodiments of the disclosure relate to apparatus and methods for multiplexing uplink data associated with different services supported by a terminal devices where data associated with one service has a higher priority (in the sense of having more stringent latency and / or reliability requirements) than data associated with another service. Thus, in one example, the higher-priority service may be a URLCC service and the lower-priority service may be an eMBB service. However, it will be appreciated the specific nature of the services is not in general of primary significance to the principles discussed herein.

Uplink Control Information (UCI) is used in wireless telecommunications systems to transmit control signalling from a terminal device to the network. UCI is typically transmitted on a physical uplink control channel, e.g. PUCCH, but can in some circumstances be transmitted on a physical uplink shared channel, e.g. PUSCH. Certain aspects of the present disclosure are based on a recognition that Uplink Control Information (UCI) for different services, for example URLLC and eMBB services, might have different requirements which mean they might benefit from being handled differently.

So as to provide some particular examples, certain embodiments of the disclosure will be described herein in the context of URLLC and eMBB services and using terminology, for example in respect of channel names such as PUCCH and PDSCH, which are typically used in connection with current 3GPP wireless telecommunications systems. However, it will be appreciated this is only for convenience, and in general the approaches discussed herein are applicable for other service types and in wireless telecommunications systems which use different terminology (thus, references herein to PUCCH should, unless the context demands otherwise, be read as referring to a physical uplink control channel generally, and not specifically to a particular format of physical uplink control channel, and so on for other channels and terminology that may be referred to herein).

The UCI in wireless telecommunications systems is typically carried by a Physical Uplink Control Channel (PUCCH). Details on how UCI is handled in wireless telecommunications systems can be found in the relevant specifications, for example in 3GPP TS 38.211, "Physical channels and modulation (Release 15)", v15.6.0 (2019-06) [6]; 3GPP TS 38.212, "Multiplexing and channel coding (Release 15)", v15.6.0 (2019-06) [7]; 3GPP TS 38.213, "Physical layer procedures for control (Release 15)", v15.6.0 (2019-06) [8]; and 3GPP TS 38.331, "Radio Resource Control (RRC) protocol specification (Release 15)" , v15.5.1 (2019-04) [9] for the 3GPP NR (New Radio) series.

Thus, a terminal device can be configured with a number of, e.g. four, sets of potential PUCCH Resources where each set is identified by a PUCCH Resource Set ID {0, 1, 2, 3}, where each set contains a number of potential PUCCH resources (e.g. in terms of time and frequency radio resources) and a maximum payload (i.e. number of bits to be used for UCI). The configurable parameters for each PUCCH Resource Set are summarized in Table 1. The values $N_2$ and $N_3$ (i.e. the maximum number of UCI bits for PUCCH Resource Sets with IDs 1 and 2) are RRC (radio resource control) configurable via the parameter maxPayloadMinus1 which can have a value of between 4 and 256 bits with $N_3 > N_2$. There are 5 potential PUCCH formats {0, 1, 2, 3, 4} and the PUCCH resources in PUCCH Resource Set ID 0 can only use PUCCH Format 0 and 1 whilst the other sets can only use PUCCH Format 2, 3 & 4.

Table 1: PUCCH Resource Set

| Set ID | Number of PUCCH Resources | Maximum UCI Bits | PUCCH Format |
|---|---|---|---|
| 0 | 8 to 32 (configurable) | 3 (2 bits + SR) | Format 0 & 1 |
| 1 | 8 | $N_2$ (configurable) | Format 2, 3 & 4 |
| 2 | 8 | $N_3$ (configurable) | Format 2, 3 & 4 |
| 3 | 8 | 1706 | Format 2, 3 & 4 |

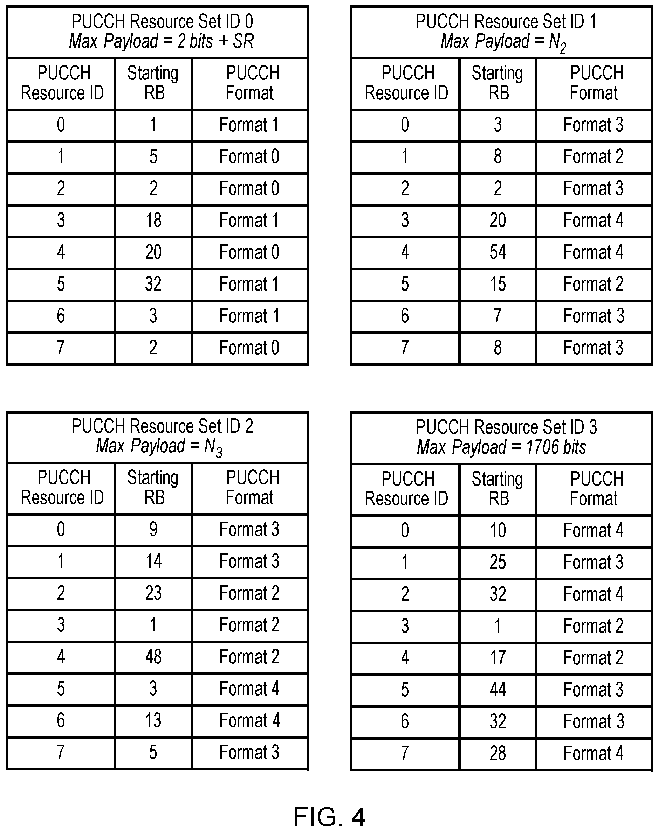

An example of the structure of PUCCH Resource Sets is shown in Figure 4. Figure 4 represents four PUCCH Resource Sets (with IDs 0, 1, 2 and 3) and in each set, there are eight PUCCH Resources (with IDs 0 to 7). The physical resources, e.g. in terms of frequency and time, the PUCCH format and any frequency hopping can be configured for each PUCCH Resource. It will be appreciated that although in this example PUCCH Resource Set ID 0 has only 8 PUCCH Resources, the number of PUCCH Resources for this set can range from 8 to 32 (as indicated in Table 1).

UCI transmitted by a terminal device may comprise a scheduling request (SR), i.e. an indication the terminal device has uplink data for transmission to the network, acknowledgement signalling (e.g. HARQ-ACK signalling) in respect of previously-received downlink transmissions, and an indication of channel status information (CSI), i.e. reporting an indication of channel quality.

A terminal device that wishes to transmit UCI selects a PUCCH Resource Set depending upon the number of UCI bits, $N_{UCI}$, to be transmitted according to the following principles:

- If $N_{UCI} \leq 2$ bits and the UCI comprises HARQ-ACK and/or SR then select PUCCH Resource Set ID 0 (PUCCH Format 0 is capable of carrying 2 HARQ-ACK bits + 1 SR, i.e. effectively 3 bits)

- If $N_{UCI} > 2$ and $\leq N_2$, then select PUCCH Resource Set ID 1

- If $N_{UCI} > N_2$ and $\leq N_3$, then select PUCCH Resource Set ID 2

- If $N_{UCI} > N_3$ and $\leq 1706$ bits, then select PUCCH Resource Set ID 3

Once the PUCCH Resource Set is selected, the terminal device selects one of the PUCCH Resources in this set depending on whether the UCI contains an SR or HARQ-ACK.

Each potential PUCCH resource in a PUCCH Resource Set provides time and frequency resources for the terminal device to transmit its UCI. The starting RB (resource block) of a PUCCH resource is configured per PUCCH resource. The number of RBs of a PUCCH resource and the time resources (starting OFDM symbol and duration) depends on the PUCCH format.

There are five potential PUCCH Formats {0, 1, 2, 3, 4}. PUCCH Format 0 and 1 are sequence based while for PUCCH Formats 2, 3 & 4 the UCI bits are encoded using a Reed-Muller or Polar code with CRC (cyclic redundancy check). PUCCH Format 0 and 2 are known as short PUCCH occupying at most 2 OFDM symbols while PUCCH Formats 1, 3 & 4 are known as long PUCCH occupying from 4 to 14 OFDM symbols. Each PUCCH format can be configured to start at any OFDM symbol within a slot as long as it does not lead to a PUCCH crossing a slot boundary. Some characteristics for the different PUCCH formats are summarized in Table 2 and explained further below.

Table 2: PUCCH Format summary

| Format | UCI Info | UCI Bits ($N_{UCI}$) | Num Symbols | Max RB | Type |
|---|---|---|---|---|---|
| 0 | SR, HARQ-ACK | 1 to 3 | 1 to 2 | 1 | Sequence |
| 1 | SR, HARQ-ACK | 1 to 2 | 4 to 14 | 1 | Sequence |
| 2 | SR, HARQ-ACK, CSI | > 2 | 1 to 2 | 1 to 16 | RM/Polar + CRC |
| 3 | SR, HARQ-ACK, CSI | > 2 | 4 to 14 | 1 to 16 | RM/Polar + CRC |
| 4 | SR, HARQ-ACK, CSI | > 2 | 4 to 14 | 1 | RM/Polar + CRC |

PUCCH Format 0

PUCCH Format 0 can carry up to 2 UCI bits and an SR (effectively 3 bits), i.e. 2 HARQ-ACK + 1 SR (Scheduling Request). It is formed from a Zadoff-Chu (ZC) sequence that occupies one RB (12 subcarriers) and 1 or 2 OFDM (orthogonal frequency division multiplex) symbols (i.e. a so-called short PUCCH), where the number of OFDM symbols is configurable. There are 13 different combinations of HARQ-ACK & SR (including combinations with different numbers of HARQ-ACK indications) that PUCCH Format 0 can indicate and they are differentiated by using different cyclic shifts, $m_{CS}$. These combinations are indicated in Table 3. It may be noted that the same cyclic shift can be used for different combinations, e.g. $m_{CS}=0$ is used for 3 combinations {positive SR}, {NACK, positive SR} & {NACK, NACK, positive SR} as the base station already knows how many HARQ-ACK bits to expect so there is no need to distinguish them based on the cyclic shift applied for the PUCCH. If there are no HARQ-ACK bits to be signalled and also no SR (i.e. negative SR) then no PUCCH is transmitted.

Table 3: Cyclic shifts for indicating different combinations of HARQ-ACK and SR for PUCCH format 0

| HARQ-ACK | | SR | Cyclic Shift $m_{CS}$ |
|---|---|---|---|
| State | HARQ-ACK UCI bits | | |
| None | 0 | Positive | $m_{CS} = 0$ |
| {NACK} | 1 | Negative | $m_{CS} = 0$ |
| {ACK} | 1 | Negative | $m_{CS} = 6$ |
| {NACK} | 1 | Positive | $m_{CS} = 3$ |
| {ACK} | 1 | Positive | $m_{CS} = 9$ |
| {NACK, NACK} | 2 | Negative | $m_{CS} = 0$ |
| {NACK, ACK} | 2 | Negative | $m_{CS} = 3$ |
| {ACK, ACK} | 2 | Negative | $m_{CS} = 6$ |
| {ACK, NACK} | 2 | Negative | $m_{CS} = 9$ |
| {NACK, NACK} | 2 | Positive | $m_{CS} = 1$ |
| {NACK, ACK} | 2 | Positive | $m_{CS} = 4$ |
| {ACK, ACK} | 2 | Positive | $m_{CS} = 7$ |
| {ACK, NACK} | 2 | Positive | $m_{CS} = 10$ |

PUCCH Format 1

PUCCH Format 1 can carry up to 2 UCI bits, for either HARQ-ACK or SR and uses BPSK (Binary Phase Shift Keying) when carrying 1 bit (1 HARQ-ACK or SR) and QPSK (Quadrature Phase Shift Keying) when carrying 2 bits (2 HARQ-ACKs). It occupies one RB (12 subcarriers) in the frequency domain and is configurable to occupy 4 to 14 OFDM symbols (i.e. it is a so-called long PUCCH) in the time domain. The modulated symbol is then multiplied (i.e. spread) using a ZC length 12 sequence in the frequency domain and further spread in the time domain using an orthogonal sequence.

PUCCH Format 2

PUCCH Format 2 can carry more than 2 UCI bits for HARQ-ACK, SR and CSI. If $N_{UCI} \leq 11$ bits (small block length), Reed-Muller coding without CRC is used. If $N_{UCI} > 11$ bits, Polar coding is used with CRC attached. The maximum number of RBs for PUCCH Format 2, $M_{RB-MAX}$, is configurable from 1 to 16 and the number of OFDM symbols is configurable from 1 to 2 (short PUCCH). The actual number of RBs, $M_{RB-PUCCH}$, used by the PUCCH is determined based on the number of UCI bits ($N_{UCI}$) and a configured maximum code rate $R_{UCI}$, for this PUCCH format. The actual number of RBs is calculated by the terminal device by determining the minimum value of $M_{RB-PUCCH}$ that satisfies the following for $M_{RB-MAX} > 1$:

$$((M_{RB-PUCCH} - 1) \times N_{SC-RB} \times N_{Symbol-PUCCH} \times Q_m \times R_{UCI}) < (N_{UCI} + O_{CRC}) \leq (M_{RB-PUCCH} \times N_{SC-RB} \times N_{Symbol-PUCCH} \times Q_m \times R_{UCI})$$

Where,

$O_{CRC}$ is the number of CRC bits attached to the UCI bits

$N_{SC-RB}$ is the number of subcarriers in a Resource Block (RB), i.e. $N_{SC-RB}$ = 12

$N_{symbol}$ is the number of OFDM symbols occupied by the PUCCH

$Q_m$ is the modulation order used by the PUCCH, i.e. for QPSK $Q_m$ =2 and for $\pi/2$-BPSK $Q_m$=1

If $(N_{UCI} + O_{CRC}) > ((M_{RB-MAX} - 1) \times N_{SC-RB} \times N_{Symbol-PUCCH} \times Q_m \times R_{UCI})$, then $M_{RB-PUCCH} = M_{RB-MAX}$. That is to say, the terminal device still transmits the UCI even if it exceeds the maximum code rate $R_{UCI}$ when using the maximum number of RBs, $M_{RB-MAX}$.

PUCCH Format 3

PUCCH Format 3 is similar to PUCCH Format 2 except that it has a longer duration of 4 to 14 OFDM symbols (i.e. it is a long PUCCH). Like Format 2 it can carry more than 2 UCI bits for HARQ-ACK, SR and CSI, and if $N_{UCI} \leq 11$ bits (small block length) Reed-Muller coding without CRC is used and if $N_{UCI} > 11$ bits, CRC is attached and Polar coding is used. The maximum number of RBs, $MR_{B-MAX}$, is configurable from 1 to 16, but the actual number of RBs used is determined based on the number of UCI bits ($N_{UCI}$) and a configured maximum code rate $R_{UCI}$ for this format in the same way as described above for PUCCH Format 2.

PUCCH Format 4

PUCCH Format 4 is similar to PUCCH Format 3 except that it occupies one RB and an additional orthogonal code is applied to it so that it can be code multiplexed with other PUCCHs, i.e. multiple PUCCH from different terminal devices can share the same frequency and time resource but can be distinguished based on the orthogonal code.
As for PUCCH Format 3, PUCCH Format 4 can carry more than 2 UCI bits for HARQ-ACK, SR and CSI, where if $N_{UCI} \leq 11$ bits (small block length) Reed-Muller coding without CRC is used and if $N_{UCI} > 11$ bits, CRC is attached and Polar coding is used. The duration for PUCCH Format 4 is configurable from 4 to 14 OFDM symbols. A configurable maximum code rate is also used to determine the maximum number of UCI bits that can be multiplexed into the PUCCH.

Scheduling Request

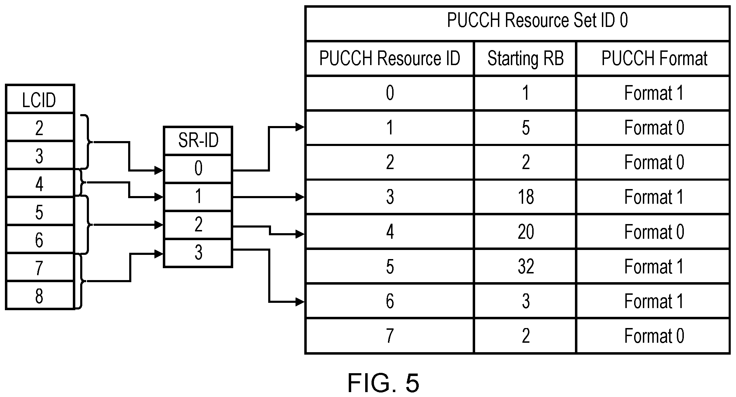

When data arrives into a Logical Channel buffer with a specific Logical Channel ID (LCID), the MAC layer in the terminal device will trigger a Scheduling Request (SR), which is a 1 bit indicator to inform the serving base station (network access node) of the need for a PUSCH resource allocation for that LCID. One or more LCID's are mapped to a Scheduling Request ID (SR-ID), where there is a maximum of 8 SR-IDs. A single stand-alone SR transmission (1 bit) can only use PUCCH Format 0 or Format 1, and each SR-ID is configured to a PUCCH Resource ID in PUCCH Resource Set ID 0, i.e. pointing to one of the PUCCH resources in PUCCH Resource Set ID 0 (which can only contain PUCCH Format 0 or Format 1). If one or more SR is multiplexed with other UCI such as HARQ-ACK and/or CSI, then other PUCCH formats can be used. An example mapping between LCID, SR-ID and PUCCH Resource ID is shown in Figure 5 (it will be appreciated this is only one example mapping and that other mappings can be configured).
In the example of Figure 5, LCID 2 & 3 are configured with SR-ID 0, and hence whenever data arrives in either LCID 2 or LCID 3, this condition will trigger an SR corresponding to the SR-ID 0 configuration. This will in turn use a PUCCH resource according to that configured for PUCCH Resource ID 1, which in the example of Figure 5 has a starting RB of 5 and uses PUCCH Format 0. The other LCIDs are similarly mapped to their corresponding SR-IDs and the PUCCH Resource ID used to transmit those SR-IDs. As noted above, Figure 5 represents only one example configuration and other LCID to SR-ID and SR-ID to PUCCH Resource ID configurations can be used, and also each PUCCH Resource ID can be configured with different starting RB locations and PUCCH Formats (either 0 or 1).
Each SR-ID is also configured with a periodicity which can range from 2 symbols (for any subcarrier spacing) to 80, 160, 320 & 640 slots for subcarrier spacing 15 kHz, 30 kHz, 60 kHz and 120 kHz respectively. A time offset can also be configured for each SR-ID, which facilitates multiplexing of SR-ID and differentiation between different SR-ID.
Since there is a one-to-one mapping between PUCCH Resource ID (in PUCCH Resource Set ID 0) and SR ID, the base station is able to determine which LCID(s) have triggered the SR based on the PUCCH frequency resource (starting RB) and time resource (periodicity, offset, starting symbol and duration) used to transmit that SR. A stand-alone SR is only transmitted if it is positive, i.e. being triggered by one or more LCIDs, while an indication of a negative SR may be sent in conjunction with other signalling (e.g. HARQ feedback).

HARQ-ACK

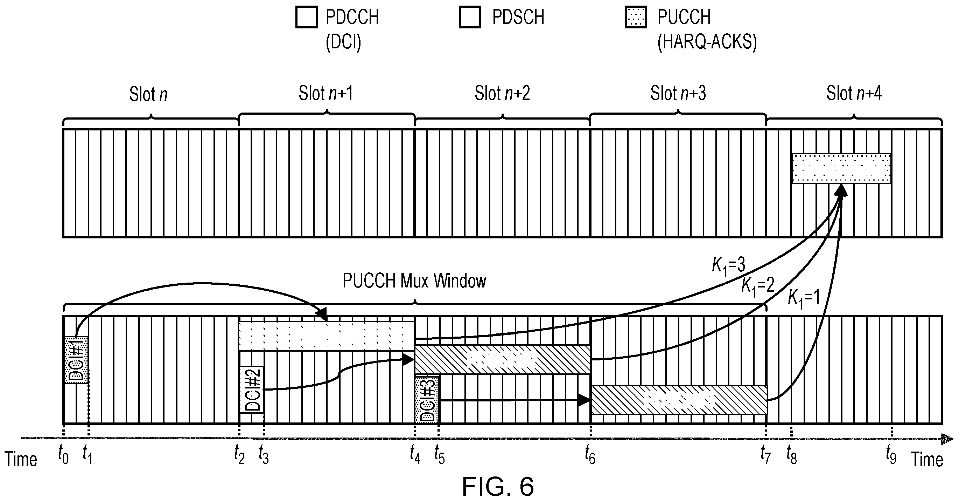

HARQ-ACK (Hybrid Automatic Repeat Request acknowledgement signalling) feedback is transmitted by the terminal device to the base station in respect of PDSCH scheduling to inform the base station whether the terminal device has successfully decoded the corresponding PDSCH or not. If the terminal device has successfully decoded the relevant PDSCH transmission the terminal device transmits an ACK indication, and if the terminal device has not successfully decoded the relevant PDSCH transmission the terminal device transmits a NACK indication. For simplicity the term acknowledgement signalling may be used to refer to HARQ signalling regardless of whether the acknowledgement signalling is indicating an ACK or a NACK. For a PDSCH ending in slot n, the corresponding PUCCH carrying the HARQ-ACK is transmitted in slot $n+K_1$, where the value of $K_1$ is indicated in the field "PDSCH-to-HARQ_feedback timing indicator" in the downlink (DL) Grant (carried by DCI (downlink control information) Format 1_0 or DCI Format 1_1). Multiple (different) PDSCHs can point to the same slot for transmission of their respective HARQ-ACKs, and multiple HARQ-ACKs in the same slot can be multiplexed into a single PUCCH. Hence a PUCCH can contain multiple HARQ-ACKs for multiple PDSCHs. An example of this is represented Figure 6.

Figure 6 schematically shows an uplink radio resource grid (top half of figure) and downlink radio resource grid (bottom half of figure) representing radio resources in time (horizontal axis) and frequency (vertical axis). Figure 6 schematically shows radio resources used by a terminal device in an example scenario during a period spanning five slots (identified in Figure 6 as slots n to n+4). In slot n the terminal device receives downlink control information (DCI#1) indicating an allocation of radio resources on a physical downlink shared channel (PDSCH#1) in slot n+1 with a PDSCH-to-HARQ_feedback timing indicator value of $K_1 = 3$. In slot n+1 the terminal device receives downlink control information (DCI#2) indicating an allocation of radio resources on a physical downlink shared channel (PDSCH#2) in slot n+2 with a PDSCH-to-HARQ_feedback timing indicator value of $K_1 = 2$. In slot n+2 the terminal device receives downlink control information (DCI#3) indicating an allocation of radio resources on a physical downlink shared channel (PDSCH#3) in slot n+3 with a PDSCH-to-HARQ_feedback timing indicator value of $K_1 = 1$. Thus, in this particular example scenario, the HARQ-ACK feedbacks for each of the three downlink transmissions on the physical downlink shared channel are transmitted by the terminal device in slot n+4 in a multiplexed manner. To support this multiplexed HARQ-ACK function a Multiplexing Window may be defined, wherein the Multiplexing Window is a time window indicating how many PDSCHs can have their associated HARQ-ACK signalling multiplexed in PUCCH in a single slot and may depend on the range of $K_1$ values. In the example in Figure 6, the PUCCH Multiplexing Window is assumed to be from Slot n to Slot n+3, which means the max $K_1$ value that can be used in this period is 4.

To transmit multiplexed HARQ-ACK signalling the terminal device firstly determines the PUCCH Resource Set to use based on the number of HARQ-ACK bits to be transmitted, i.e. $N_{UCI}$ bits as described above. Once the PUCCH Resource Set is determined, the terminal device then determines the PUCCH Resource ID of the selected PUCCH Resource Set to use. For a PUCCH Resource Set with 8 PUCCH resources, the PUCCH Resource ID to use is indicated by the PUCCH Resource Indicator (PRI) in the DL Grant scheduling the last PDSCH (i.e. the PRI field in DCI Format 1_0 and DCI Format 1_1). For PUCCH Resource Set ID 0 with more than 8 configured PUCCH resources, in addition to the PRI, the terminal device also uses the CCE (Control Channel Element) index of the PDCCH carrying the DL Grant scheduling the last PDSCH whose HARQ-ACK signalling is to be multiplexed, i.e. the last PDSCH in the PUCCH Multiplexing Window (for example in Figure 6, the last PDSCH is PDSCH#3).

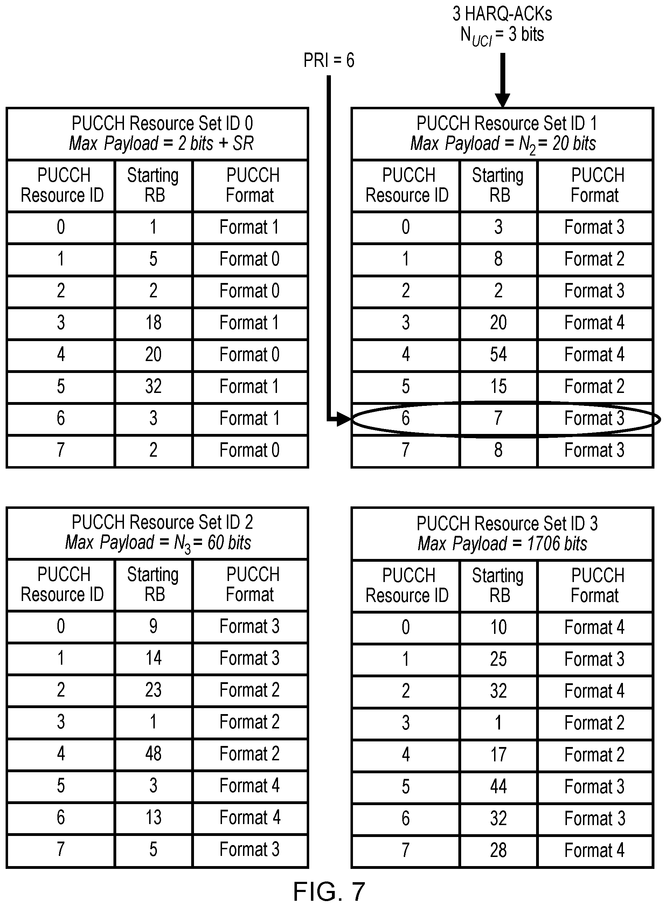

An example of a PUCCH Resource ID selection by a terminal device with 3 HARQ-ACK feedbacks to multiplex in UCI in a single slot (e.g. as for the Example in Figure 6) is shown in Figure 7. Figure 7 is similar to, and will be understood from, Figure 4 with $N_2$ (Max Payload for PUCCH Resource Set ID 1) configured to 20 bits and $N_3$ (Max Payload for PUCCH Resource Set ID 2) configured to 60 bits (it will be appreciated these are simply example values). Figure 7 also indicates in these example circumstances the terminal device selects PUCCH Resource ID 6 in PUCCH Resource Set ID 1. This is because the number of UCI bits that the terminal device needs to transmit for the three multiplexed HARQ-ACK feedbacks is $N_{UCI}=3$, which leads the terminal device to select PUCCH Resource Set ID 1 since it has the smallest Max Payload that can contain three HARQ-ACK bits and it is assumed the DL Grant scheduling the last PDSCH (e.g. PDSCH#3 in Figure 6) has the PRI field set to 6, which indicates to the terminal device to use PUCCH Resource ID = 6 for its UCI transmission, which means the terminal device should use PUCCH Format 3 starting at RB 7.

SR and HARQ-ACK Multiplexing

It is possible for a terminal device to be in a situation in which a UCI carrying an SR for the terminal device and another UCI carrying HARQ-ACK feedback collide in the same slot. In currently proposed wireless telecommunications systems according to Release 15 of the 3GPP standards specifications series, the SR and the HARQ-ACK feedback in the same slot are multiplexed into a single UCI taking account of the following principles.

If an SR UCI scheduled to be carried by a first PUCCH using PUCCH Format 0 or Format 1 collides with a HARQ-ACK UCI scheduled to be carried by a second PUCCH using Format 0, then the SR is multiplexed on the second PUCCH (PUCCH Format 0) by using a cyclic shift corresponding to a positive SR and the relevant HARQ-ACK values to be signalled are summarized in Table 3 above.

If an SR UCI scheduled to be carried by a first PUCCH using PUCCH Format 0 collides with a HARQ-ACK UCI scheduled to be carried by a second PUCCH using Format 1, then the SR is simply not transmitted, i.e. only the HARQ-ACK UCI carried by the second PUCCH using Format 1 is transmitted.

If an SR UCI scheduled to be carried by a first PUCCH using PUCCH Format 1 collides with a HARQ-ACK UCI scheduled to be carried by a second PUCCH using Format 1, then if the SR is positive, the UCI with the HARQ-ACK is transmitted using the first PUCCH but if the SR is negative the HARQ-ACK is transmitted using the second PUCCH.

If a terminal device is configured to potentially transmit multiple SRs, e.g. a number $K_{SR}$ SRs which map to $K_{SR}$ different SR-IDs, and their configured periodicities collide in a particular slot, and in this same specific slot a second PUCCH scheduled to carry a number $O_{ACK}$ of HARQ-ACK bits using either Format 2, Format 3 or Format 4, is also transmitted, then the SRs are multiplexed into the second PUCCH.

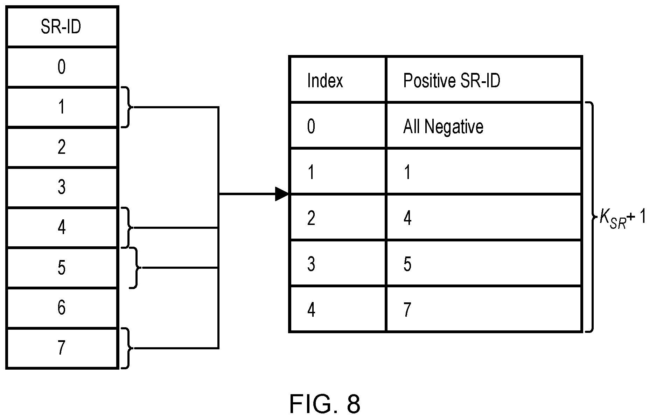

It may be noted that when $K_{SR}$ PUCCH resources collide in the same slot, it is not necessarily the case that all of those SRs are positive.. Thus a number $O_{SR}$ = ceiling[$\log_2(K_{SR}+1)$] SR bits are used to indicate which of the $K_{SR}$ SR-IDs has a positive SR. If all the SRs in that slot are negative then all $O_{SR}$ bits are set to 0. The $O_{SR}$ bits are appended to the end of the $O_{ACK}$ bits in the UCI and transmitted using the second PUCCH. This functionality basically corresponds with forming what might be termed an SR Indication Lookup Table (SILT) with $K_{SR}+1$ entries and the appended $O_{SR}$ bits point to one of these entries to indicate which SR-ID has a positive SR. A schematic example SILT and mapping of SR-IDs to entries in the SILT is schematically shown in Figure 8. In Figure 8 there are eight SR-IDs {0, 1, 2, 3, 4, 5, 6, 7} configured and in this example it is assumed four of them (i.e. $K_{SR}$ = 4) with SR-ID {1, 4, 5, 7} collide in a specific slot. These four SR-IDs thus form a lookup table of size $K_{SR}+1$ = 5 entries, where one entry is used to indicate that all SRs are negative. Here $O_{SR}$ = 3 bits are used to indicate one of these 5 entries. It should be noted that although $O_{SR}$ bits are used, only 1 positive SR out of $K_{SR}$ is indicated since these $O_{SR}$ bits point to an index of one of these $K_{SR}$ SR-IDs.

In currently proposed wireless telecommunications systems according to Release 15 of the 3GPP standards specifications series, the PUCCH is still transmitted even if the total number of UCI bits $N_{UCI}$ = $O_{ACK} + O_{SR} + O_{CRC}$ (where $O_{CRC}$ is the number of CRC bits) to transmit means the maximum code rate $R_{UCI}$ is exceeded when the maximum number of RBs $M_{RB-MAX}$ is used. However, while this is acceptable in many cases, the inventors have recognized this may not be acceptable for UCI for some services, for example for URLLC or other high priority services since the resulting code rate for the PUCCH with the multiplexed UCI may not be sufficient to provide the reliability target for the URLLC. Thus in accordance with some embodiments of the disclosure certain modifications to existing UCI multiplexing approaches are provided to seek to help reduce the impact of this issue.

Thus, some embodiments of the disclosure provide a method of operating a terminal device in a wireless telecommunications system that comprises determining a scheduling request (or more generally, first uplink control information) should be transmitted using a first set of radio resources; determining an indication of a priority level for the scheduling request; determining additional uplink control information (e.g. HARQ-ACK and / or CSI information) should be transmitted using a second set of radio resources; determining an indication of a priority level for the additional uplink control information; determining if there is an overlap (i.e. a collision) between the first and second sets of radio resources; in response to determining there is an overlap between the first and second sets of radio resources, selectively multiplexing the scheduling request and the additional uplink control information together by taking account of their respective priority levels and selecting a set of radio resources to use for transmitting the multiplexed scheduling request and additional uplink control information; and transmitting the multiplexed scheduling request and additional uplink control information using the selected set of radio resources.

Thus, certain embodiments of the disclosure involve aspects such as (i) determining a priority level for uplink control information (including SRs, HARQ-ACK and CSI); (ii) selecting a set of radio resources to transmit multiplexed control information; and (iii) multiplexing different types of control information together in a manner which takes account of different priority levels for the different types of control information for transmission on the selected set of radio resources.

Different approaches for these aspects will be described herein mainly in the context of first uplink control information comprising a scheduling request, SR, colliding with second uplink control information comprising acknowledgement signalling (HARQ-ACK), but it will be appreciated the same principles also apply for collisions between other types of uplink control information, for example, between an SR UCI and a CSI UCI and so the examples below that focus on SR UCIs and HARQ-ACK UCIs can be generalised accordingly to first and second UCIs.

<u>(i) Example approaches for determining a priority level for uplink control information (UCI)</u>

In existing wireless telecommunications systems, the UCIs are not associated with any priority levels, and consequently when radio resources for different UCIs for a terminal device overlap (i.e. collide in time), a scheduling request UCI (SR UCI) will in general be multiplexed with the other UCI regardless of the respective traffic types and requirements for different services associated with the different UCIs.

In accordance with certain examples of the disclosure, each UCI type (e.g. SR, HARQ-ACK, CSI) is associated with a number of different priority groups, wherein each priority group is associated with a priority level. The number of priority groups for each different type of UCI may be different, e.g. SR might have three priority groups (which may be referred to as SR Priority Groups) while HARQ-ACK might have two groups (which may be referred to as HARQ-ACK Priority Groups). It will be appreciated that other numbers of priority groups could be used.

As noted above, scheduling requests are associated with a scheduling request identifier, SR-ID. In accordance with one example of the disclosure, the SRs identified by their respective SR-IDs are divided into SR Priority Groups where each group has different priority. For example, if there are 8 configured SR-IDs {0, 1, 2, 3, 4, 5, 6, 7}, three SR Priority Groups might be configured such that Group 1's SR-IDs = {0, 3}, Group 2's SR-IDs = {1, 2, 5} and Group 3's SR-IDs = {4, 6, 7}. Group 1 might have a higher priority than Group 2, and Group 2 might have a higher priority than Group 3. It will be appreciated this is simply one example and different numbers of priority groups and mappings between the SR-IDs and priority groups can be configured for other examples. For example, each of eight SR-IDs might be associated with a different one of eight priority levels (i.e. so each priority group is associated with one SR-ID).

In some cases the HARQ-ACK UCIs may have a different number of priority levels. For example, the HARQ-ACKs can be grouped into two priority levels, high priority and low priority, for example based on the nature of service with which the UCI are associated. For example, HARQ-ACK feedback for a URLLC service may be classed as high priority while HARQ-ACK feedback for an eMBB service may be classed as low priority.

A UCI might be classed as "high priority" if its priority group is higher than or equal to a predetermined threshold priority level, and otherwise might be classed as "low priority". This allows each UCI type to be classified as either "high priority" or "low priority" to simplify direct comparison of relative priorities for different UCI types regardless of the number of priority groups defined for each UCI type. For example, the SR-IDs may be divided into three priority groups {SR Group 1, SR Group 2, SR Group 3} where the lower the group number the higher the priority. The HARQ-ACK, on the other hand, may be divided into four priority groups {ACK Group 1, ACK Group 2, ACK Group 3, ACK Group 4}, and similarly the lower the group number the higher the priority. Because of the different number of priority groups it is not clear whether SR group 2 should have a higher or lower priority than ACK group 2. However, if in this example a predetermined threshold priority level for SR is set at the priority level of SR Group 2, then SR UCIs associated with SR Groups 1 and 2 will be classified as high priority and SR UCIs associated with SR Group 3 will be classified as low priority. Similarly, if a predetermined threshold priority level for HARQ-ACK is set at the priority level of ACK Group 3, then HARQ-ACK UCIs associated with ACK Groups 1, 2 and 3 will be classified as high priority and HARQ-ACK UCIs associated with ACK Group 4 will be classified as low priority. It will be appreciated that more than one predetermined threshold priority level can be defined for each UCI type to give more classifications, e.g. two threshold levels can provide for classification of UCIs as "high priority", "mid priority" and "low priority". By normalising the priority levels for different UCI types in this way, the priority levels of different types of UCI can be more easily directly compared. Of course in some cases the number of priority groups might be the same for different types of UCI (e.g. SR-IDs may be divided into 3 priority groups and HARQ-ACK may also take one of three priority levels). Since the number of priority groups is the same among different UCI types, they can be compared against each other directly without a threshold-based priority normalising function.

In certain embodiments of the disclosure it will be helpful for priority levels for each UCI type to be determined at the physical layer, and there are various different ways this can be done.

In one example separate PUCCH Resource Sets may be configured for different services (e.g. URLLC or eMBB) having different maximum code rates and numbers of resource blocks ($M_{RB-MAX}$), and so on. The priority level for a UCI can then be determined at the physical layer from the PUCCH Resource Set being used. That is to say, in accordance with certain embodiments of the disclosure, the priority level for a UCI may be determined from the PUCCH Resources scheduled for that UCI. Other approaches, as discussed further below, can allow a priority level for a UCI to be determined at the physical layer without defining separate PUCCH Resource Sets for different services. While some examples will be presented in the context of one or other of SR and HARQ-ACK UCIs, it will be appreciated that in general corresponding approaches can be used for any of the different types of UCI. It will further be appreciated that while the examples described herein refer to how the terminal device may determine a priority level, in general the specific way in which priority levels are allocated to different services will depend on the specific implementation and operating requirements of the wireless telecommunications systems at hand. That is to say, what is of primary significance for certain embodiments of the disclosure is not how a priority level is initially established for a given UCI, but how a terminal device may determine the priority level that has already been established, and in particular how to do this at the physical layer.

SR Priorities

In some examples a priority level for each SR UCI may be determined by the maximum code rate of the PUCCH Resource assigned to the SR transmission, whereby lower maximum code rates are determined to correspond to higher priority SRs. It will be appreciated the maximum code rate for a UCI is visible at the terminal device physical layer so the terminal device can calculate the number of RBs to be used for the PUCCH.

In some examples a priority level for each SR may be determined from its associated SR-ID. One simple implementation for this would be that the lower the SR-ID the higher its priority. A base station can then ensure that high priority services are associated with low-numbered SR-IDs. It will be appreciated the SR-ID is visible at the terminal device physical layer so the terminal device can calculate the relevant PUCCH Resource ID using a SILT such as represented in Figure 5.

In some examples a priority level for each SR may be determined from the duration of the UCI's scheduled PUCCH Resource. How the duration of the UCIs scheduled PUCCH Resource maps to a priority level will depend on the implementation at hand. For example, if high reliability is considered a primary defining factor for classifying a UCI as high priority, then longer durations for the PUCCH Resource for a UCI may be determined to represent higher priority (since these will indicate the UCI has been scheduled with a relatively long duration transmission to improve reliability). However, if low latency is considered a primary defining factor for classifying a UCI as high priority, then shorter durations for the PUCCH Resource for a UCI may be determined to represent higher priority (since these will indicate the UCI has been scheduled with a short duration transmission to reduce latency).

In some examples a priority level for each SR may be determined from its periodicity. As noted above, each SR-ID is configured with a periodicity and this is known to the physical layer. For example, a relatively short periodicity for an SR-ID may be determined to indicate a relatively high priority level because it may be expected for some implementations that a high priority service is associated with a requirement for low latency, and so relatively low periodicity may be configured for the SR-ID so that transmissions can be made relatively frequently.

In some examples a priority level for each SR may be determined from a PUCCH Format used to carry the SR. The PUCCH Format is known to the terminal device at the physical layer. For example, PUCCH Format 0 may be considered higher priority than PUCCH Format 1 or vice-versa, depending on how higher layers (i.e. layers higher than the physical layer) are configured to associate different priority services with different PUCCH formats.

In some examples a priority level for each SR may be determined at the physical layer from an indication received from the MAC (Medium Access Control) layer. That is to say, the MAC layer may, in addition to triggering the transmission of an SR representing an SR-ID, also indicate the priority of that SR transmission to the physical layer.

HARQ-ACK Priorities

In some examples a priority level for each HARQ-ACK UCI may be determined from an indication of the priority level received in association with a resource allocation message (DL Grant) for the downlink signalling to which the HARQ-ACK UCI relates. If the HARQ-ACK UCI relates to downlink signalling for multiple DL Grants with different priority levels, the priority level for the UCI may, for example, be determined as the highest of these.

In some examples a priority level for each HARQ-ACK UCI may be determined from the scheduled PUCCH resources for the UCI. For example a PUCCH Resource with a low PUCCH Resource ID may be taken to indicate higher priority or vice-versa. This approach may thus take account of the indicated PRI indicator in the DL Grant being acknowledged to also indicate a priority level for the PUCCH for the corresponding HARQ-ACK UCI.

In some examples a priority level for each HARQ-ACK UCI may be determined by the code rate of the scheduled PUCCH Resource for the HARQ-ACK UCI transmission, whereby a lower code rate is determined to correspond to a higher priority HARQ-ACK UCI.

In some examples a priority level for each HARQ-ACK UCI may be determined from a sub-slot size for transmitting the HARQ-ACK UCI. The possibility of sub-slot operation for HARQ-ACK is a recently introduced proposal for some wireless telecommunications systems, for example in Release 16 of the 3GPP standards specifications series. Sub-slot operation for HARQ-ACK allows the timings of HARQ-ACK UCI to be configured with a resolution which is less than one slot (i.e. the HARQ-ACK process operates with sub-slot timing granularity). For example, a HARQ-ACK UCI configured for sub-slot operation may be determined to have a high priority as compared to a HARQ-ACK UCI not configured for sub-slot operation (which reflects the fact a service with more stringent latency requirements will be configured for sub-slot operation). In cases where multiple different sub-slot sizes may be configured, HARQ-ACK UCI priority may be determined from the configured sub-slot size with a shorter sub-slot size indicating a higher priority. Conversely, depending on system implementation, a HARQ-ACK UCI configured for sub-slot operation may be determined to have a low priority as compared to a HARQ-ACK UCI not configured for sub-slot operation (which reflects the fact a service with less stringent reliability requirements will be configured for sub-slot operation). In general, it will be appreciated the particular mapping between a given sub-slot size and priority level will depend on how the system is configured to use sub-slot sizes according to priority (i.e. whether latency or reliability is considered most important).

(ii) Example approaches for selecting radio resources to use for transmitting multiplexed uplink control information

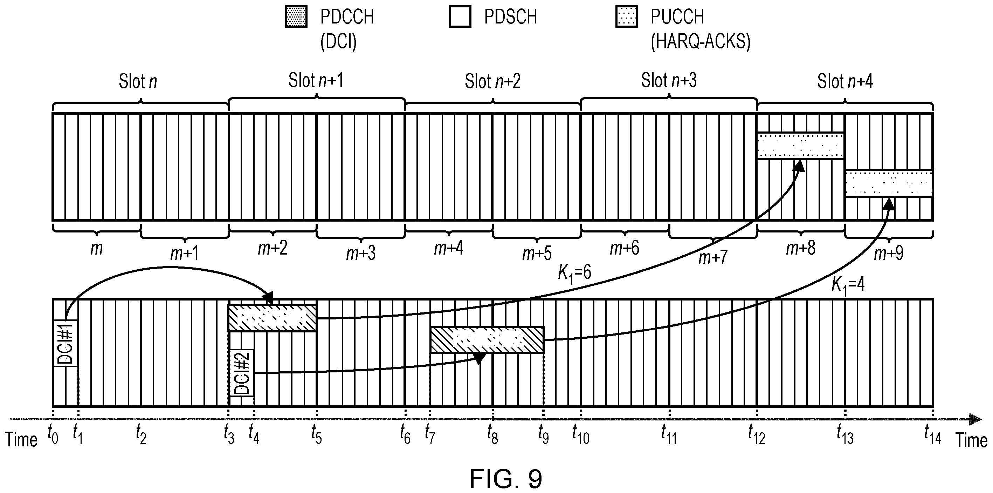

As noted above, a first UCI carried by a first PUCCH may be considered to collide with a second UCI carried by a second PUCCH if the first PUCCH and the second PUCCH are scheduled in the same slot, sub-slot, or more generally overlap in time, i.e. there is an overlap in time between the respective sets of radio resources associated with the first and second PUCCH. Certain aspects of the disclosure relate to selecting one of the respective sets of radio resources associated with the first and second PUCCH to use for transmitting the first UCI and / or the second UCI following a priority-based decision on whether and how to multiplex them. As also noted above, a recent development in some wireless telecommunications systems, e.g. according to Release 16 of the 3GPP standards specifications series, is the introduction of sub-slot operation for uplink control information, e.g. for HARQ-ACK UCI. With this approach the temporal granularity for scheduling PUCCH carrying HARQ-ACK UCI in respect of at least some PDSCH (e.g. PDSCH for URLLC services) can be different. That is to say, for sub-slot operation the temporal granularity (timing resolution) of the parameter $K_1$ ("PDSCH-to-HARQ_feedback timing indicator" - the time difference between end of PDSCH and the start of its corresponding PUCCH) is smaller than a slot. An example of this is shown in Figure 9.

Figure 9 schematically shows an uplink radio resource grid (top half of figure) and downlink radio resource grid (bottom half of figure) representing radio resources in time (horizontal axis) and frequency (vertical axis). Figure 9 is similar to, and will be understood from, Figure 6, but shows an example which incorporates sub-slot operation with a sub-slot size of 0.5 slots (e.g. 7 symbols for a 14 symbol slot size). As for Figure 6, Figure 9 schematically shows radio resources used by a terminal device in an example scenario during a period spanning five slots (identified in Figure 9 as slots n to n+4) / ten sub-slots (identified in Figure 9 as sub-slots m to m+9). At the beginning of slot n (i.e. in sub-slot m) the terminal device receives downlink control information (DCI#1) indicating an allocation of radio resources on a physical downlink shared channel (PDSCH#1) in sub-slot m+2, which is in slot n+1, with a PDSCH-to-HARQ_feedback timing indicator value of $K_1 = 6$ (in units of sub-slots). Thus the HARQ-ACK signalling (HARQ-ACK1) associated with the allocation of radio resources in sub-slot m+2 is transmitted in sub-slot m+8 (i.e. m+2+ $K_1$), which is in slot n+4. At the beginning of slot n+1 (i.e. in sub-slot m+2) the terminal device receives downlink control information (DCI#2) indicating an allocation of radio resources on a physical downlink shared channel (PDSCH#2) that spans sub-slot m+4 and m+5, which is in slot n+2, with a PDSCH-to-HARQ_feedback timing indicator value of $K_1 = 4$ (in units of sub-slots). Thus the HARQ-ACK signalling (HARQ-ACK2) associated with the allocation of radio resources spanning sub-slots m+4 and m+5 is transmitted in sub-slot m+9 (i.e. m+5+ $K_1$), which is in slot n+4, since the reference sub-slot for $K_1$ is the sub-slot in which the PDSCH ends, and in this example case PDSCH#2 ends in sub-slot m+5.

Thus, as seen in Figure 9 it is possible for two different instances of the same type of UCI (e.g. HARQ-ACK UCI) to be scheduled for different times in the same slot. This means it is possible for another type of UCI (e.g. SR UCI) to collide with multiple instances of another type of UCI. Thus certain aspects of the disclosure relate to selecting one from more than two sets of radio resources correspondingly associated with more than two UCIs to use for transmitting the UCIs following a priority-based decision on whether and how to multiplex them.

A number of example scenarios will now be set out which involve various different ways in which a first type of UCI, e.g. SR UCI, scheduled for transmission on a first set of radio resources (first PUCCH) collides / overlaps with a second type of UCI, e.g. one or more HARQ-ACK UCIs, scheduled for transmission on one or more other sets of radio resources (PUCCHs), and approaches for selecting a set of radio resources to use for transmitting the UCIs following a priority-based determination on multiplexing according to certain embodiments of the disclosure will be described.

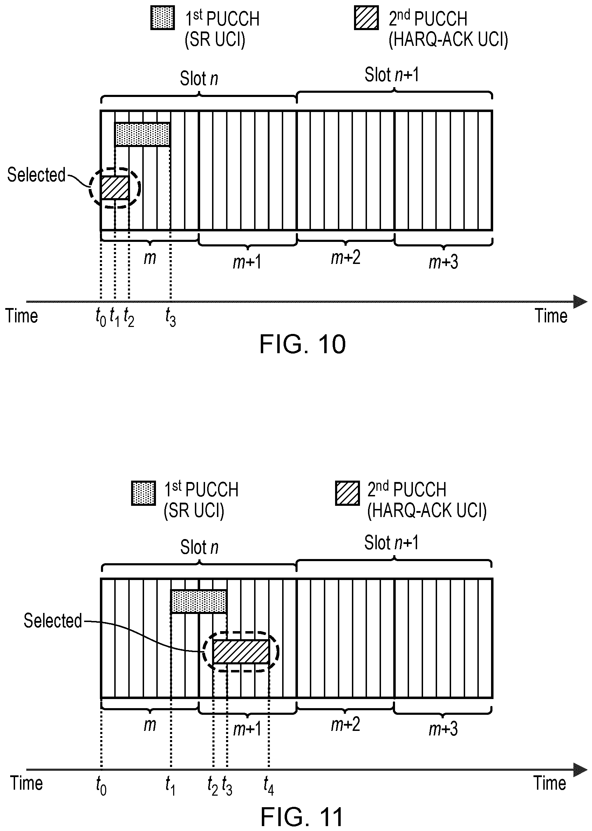

Figure 10 schematically shows a portion of an uplink radio resource grid representing radio resources in time (horizontal axis) and frequency (vertical axis) for one example implementation of an approach according to an example of the disclosure. Figure 10 schematically shows radio resources scheduled for use by a terminal device for UCI in an example scenario during a period spanning two slots (identified in Figure 10 as slots n and n+1) / four sub-slots (identified in Figure 10 as sub-slots m to m+3). In this example it is assumed a first PUCCH (which in this example is assumed to be for an SR UCI) is scheduled between times t1 and t3 (which is in sub-slot m in slot n) and a second PUCCH (which in this example is assumed to be for a HARQ-ACK UCI) is scheduled between times t0 and t2 (which is again in sub-slot m in slot n). Because the radio resources defined by the respective PUCCHs for the SR UCI and the HARQ-ACK UCI overlap in time, the terminal device determines whether and how to multiplex the SR UCI and HARQ-ACK UCI in accordance with the principles disclosed herein and transmits the resulting multiplexed UCI using radio resources for a selected one of the PUCCH, which in this example is assumed to be the second PUCCH, as schematically indicated by the surrounding dotted-line.

Figure 11 schematically shows a portion of an uplink radio resource grid representing radio resources in time (horizontal axis) and frequency (vertical axis) for one example implementation of an approach according to an example of the disclosure. Figure 11 schematically shows radio resources scheduled for use by a terminal device for UCI in an example scenario during a period spanning two slots (identified in Figure 11 as slots n and n+1) / four sub-slots (identified in Figure 11 as sub-slots m to m+3). In this example it is assumed a first PUCCH (which in this example is assumed to be for an SR UCI) is scheduled between times t1 and t3 (i.e. it spans the boundary between sub-slots m and m+1 in slot n) and a second PUCCH (which in this example is assumed to be for a HARQ-ACK UCI) is scheduled between times t2 and t4 (which is in sub-slot m+1 in slot n). Because the radio resources defined by the respective PUCCHs for the SR UCI and the HARQ-ACK UCI overlap in time, the terminal device determines whether and how to multiplex the SR UCI and HARQ-ACK UCI in accordance with the principles disclosed herein and transmits the resulting multiplexed UCI using radio resources for a selected one of the PUCCH, which in this example is assumed to be the second PUCCH, as schematically indicated by the surrounding dotted-line.

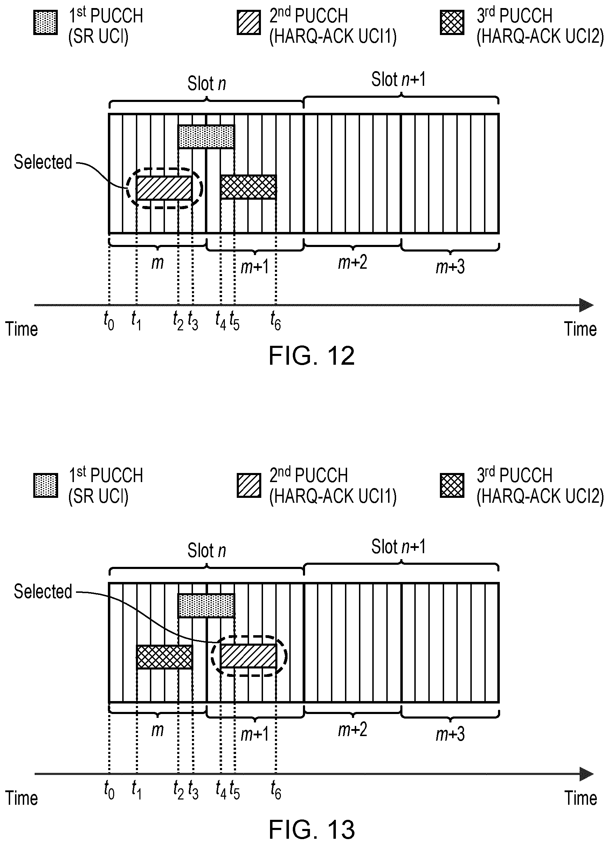

Figure 12 schematically shows a portion of an uplink radio resource grid representing radio resources in time (horizontal axis) and frequency (vertical axis) for one example implementation of an approach according to an example of the disclosure. Figure 12 schematically shows radio resources scheduled for use by a terminal device for UCI in an example scenario during a period spanning two slots (identified in Figure 12 as slots n and n+1) / four sub-slots (identified in Figure 12 as sub-slots m to m+3). In this example it is assumed a first PUCCH (which in this example is assumed to be for an SR UCI) is scheduled between times t2 and t5 (i.e. it spans the boundary between sub-slots m and m+1 in slot n), a second PUCCH (which in this example is assumed to be for a HARQ-ACK UCI, labelled HARQ-ACK UCI1) is scheduled between times t1 and t3 (which is in sub-slot m in slot n), and a third PUCCH (which in this example is assumed to be for another HARQ-ACK UCI, labelled HARQ-ACK UCI2) is scheduled between times t4 and t6 (which is in sub-slot m+1 in slot n). Because the radio resources defined by the first PUCCH for the SR UCI overlaps with both of the radio resources defined by the second PUCCH for HARQ-ACK UCI1 and the third PUCCH for HARQ-ACK UCI2, the terminal device determines whether and how to multiplex the SR UCI with a selected one of HARQ-ACK UCI1 and HARQ-ACK UCI2 in accordance with the principles disclosed herein and transmits the resulting multiplexed UCI using radio resources for the corresponding PUCCH of the selected one of HARQ-ACK UCI1 and HARQ-ACK UCI2, which in this example is assumed to be the second PUCCH (for HARQ-ACK UCI1), as schematically indicated by the surrounding dotted-line. Thus for some implementations, when there is an overlap between a first set of radio resources for a first UCI and both a second set of radio resources for a second UCI and a third set of radio resources for a third UCI, the selected set of radio resources for transmitting the multiplexed UCI may be the earlier in time of the second set of radio resources and the third set of radio resources. This allows for the multiplexed UCI to be transmitted sooner than if the selected set of radio resources for transmitting the multiplexed UCI were the later in time of the second set of radio resources and the third set of radio resources, which can help satisfy latency requirements.

Figure 13 schematically shows a portion of an uplink radio resource grid representing radio resources in time (horizontal axis) and frequency (vertical axis) for one example implementation of an approach according to an example of the disclosure. Figure 13 schematically shows radio resources scheduled for use by a terminal device for UCI in an example scenario during a period spanning two slots (identified in Figure 13 as slots n and n+1) / four sub-slots (identified in Figure 13 as sub-slots m to m+3). In this example it is assumed a first PUCCH (which in this example is assumed to be for an SR UCI) is scheduled between times t2 and t5 (i.e. it spans the boundary between sub-slots m and m+1 in slot n), a second PUCCH (which in this example is assumed to be for a HARQ-ACK UCI, labelled HARQ-ACK UCI1) is scheduled between times t4 and t6 (which is in sub-slot m+1 in slot n), and a third PUCCH (which in this example is assumed to be for another HARQ-ACK UCI, labelled HARQ-ACK UCI2) is scheduled between times t1 and t3 (which is in sub-slot m in slot n). Because the radio resources defined by the first PUCCH for the SR UCI overlaps with both of the radio resources defined by the second PUCCH for HARQ-ACK UCI1 and the third PUCCH for HARQ-ACK UCI2, the terminal device determines whether and how to multiplex the SR UCI with a selected one of HARQ-ACK UCI1 and HARQ-ACK UCI2 in accordance with the principles disclosed herein and transmits the resulting multiplexed UCI using radio resources for the corresponding PUCCH of the selected one of HARQ-ACK UCI1 and HARQ-ACK UCI2, which in this example is assumed to be the second PUCCH (for HARQ-ACK UCI1), as schematically indicated by the surrounding dotted-line. Thus for some implementations, when there is an overlap between a first set of radio resources for a first UCI and both a second set of radio resources for a second UCI and a third set of radio resources for a third UCI, the selected set of radio resources for transmitting the multiplexed UCI may be the later in time of the second set of radio resources and the third set of radio resources. This allows for the multiplexed UCI to be transmitted later than if the selected set of radio resources for transmitting the multiplexed UCI were the earlier in time of the second set of radio resources and the third set of radio resources. One application of this approach would be to select the third PUCCH, as opposed to the second PUCCH, to implicitly indicate the SR priority. For example, if the SR priority is low, the later third PUCCH may be used, but if the SR priority is high, the earlier second PUCCH may be used instead. The network may then blind decode for the presence of the SR in the second and third PUCCH.

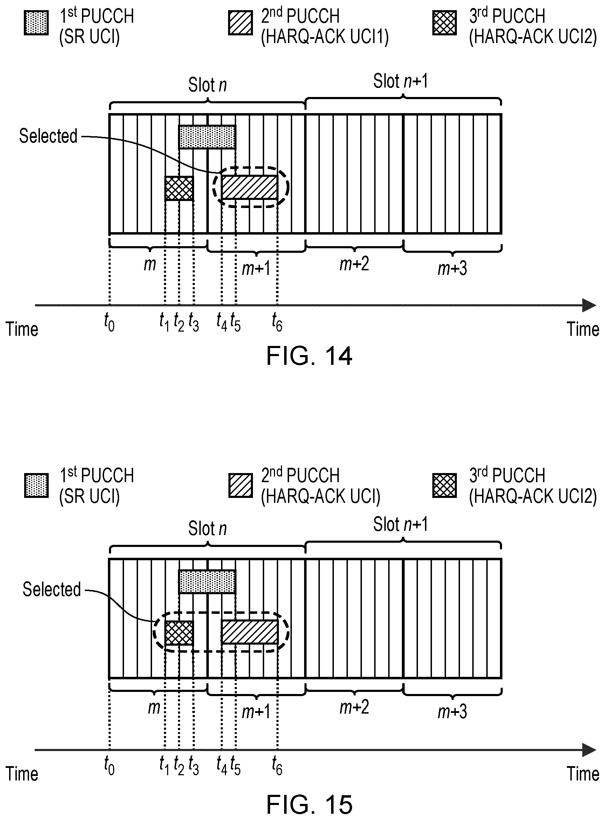

Figure 14 schematically shows a portion of an uplink radio resource grid representing radio resources in time (horizontal axis) and frequency (vertical axis) for one example implementation of an approach according to an example of the disclosure. Figure 14 schematically shows radio resources scheduled for use by a terminal device for UCI in an example scenario during a period spanning two slots (identified in Figure 14 as slots n and n+1) / four sub-slots (identified in Figure 14 as sub-slots m to m+3). In this example it is assumed a first PUCCH (which in this example is assumed to be for an SR UCI) is scheduled between times t2 and t5 (i.e. it spans the boundary between sub-slots m and m+1 in slot n), a second PUCCH (which in this example is assumed to be for a HARQ-ACK UCI, labelled HARQ-ACK UCI1) is scheduled between times t4 and t6 (which is in sub-slot m+1 in slot n and spans four symbols), and a third PUCCH (which in this example is assumed to be for another HARQ-ACK UCI, labelled HARQ-ACK UCI2) is scheduled between times t1 and t3 (which is in sub-slot m in slot n and spans two symbols). Because the radio resources defined by the first PUCCH for the SR UCI overlaps with both of the radio resources defined by the second PUCCH for HARQ-ACK UCI1 and the third PUCCH for HARQ-ACK UCI2, the terminal device determines whether and how to multiplex the SR UCI with a selected one of HARQ-ACK UCI1 and HARQ-ACK UCI2 in accordance with the principles disclosed herein and transmits the resulting multiplexed UCI using radio resources for the corresponding PUCCH of the selected one of HARQ-ACK UCI1 and HARQ-ACK UCI2, which in this example is assumed to be the second PUCCH (for HARQ-ACK UCI1), as schematically indicated by the surrounding dotted-line. Thus for some implementations, when there is an overlap between a first set of radio resources for a first UCI and both a second set of radio resources for a second UCI and a third set of radio resources for a third UCI, the selected set of radio resources for transmitting the multiplexed UCI may be the set of radio resources having the greatest potential capacity for carrying UCI. (As noted previously each PUCCH resource is associated with a PUCCH format that has a fixed or configurable maximum payload, i.e. potential capacity.) This allows for the multiplexed UCI to be transmitted more reliably.

In a variation of the approach discussed above with reference to Figure 14, in another implementation the selected set of radio resources for transmitting the multiplexed UCI may be the set of radio resources associated with the lowest code rate for its UCI in the expectation the radio resources associated with the lowest code rate may able to more reliably accommodate the additional UCI.

Figure 15 schematically shows a portion of an uplink radio resource grid representing radio resources in time (horizontal axis) and frequency (vertical axis) for one example implementation of an approach according to an example of the disclosure. Figure 15 schematically shows radio resources scheduled for use by a terminal device for UCI in an example scenario during a period spanning two slots (identified in Figure 15 as slots n and n+1) / four sub-slots (identified in Figure 15 as sub-slots m to m+3). In this example it is assumed a first PUCCH (which in this example is assumed to be for an SR UCI) is scheduled between times t2 and t5 (i.e. it spans the boundary between sub-slots m and m+1 in slot n), a second PUCCH (which in this example is assumed to be for a HARQ-ACK UCI, labelled HARQ-ACK UCI1) is scheduled between times t4 and t6 (which is in sub-slot m+1 in slot n and spans four symbols), and a third PUCCH (which in this example is assumed to be for another HARQ-ACK UCI, labelled HARQ-ACK UCI2) is scheduled between times t1 and t3 (which is in sub-slot m in slot n and spans two symbols).

Thus the radio resources defined by the first PUCCH for the SR UCI overlaps with both of the radio resources defined by the second PUCCH for HARQ-ACK UCI1 and the third PUCCH for HARQ-ACK UCI2. In some example implementations the terminal device may determine to multiplex the SR UCI with both HARQ-ACK UCI1 and HARQ-ACK UCI2 in accordance with the principles disclosed herein and transmit the resulting multiplexed UCIs using radio resources for both the corresponding PUCCHs for HARQ-ACK UCI1 and HARQ-ACK UCI2, as schematically indicated by the surrounding dotted-line. There are different ways in which the terminal device may multiplex the SR UCI with both HARQ-ACK UCI1 and HARQ-ACK UCI2 depending on the implementation at hand. For example, in some cases the SR UCI may be multiplexed independently with both HARQ-ACK UCI1 and HARQ-ACK UCI2. That is to say, the same SR UCI may be separately selectively multiplexed with both HARQ-ACK UCI1 and HARQ-ACK UCI2 to provide redundancy (duplication) for transmission of the SR UCI. In some cases this may result in the SR UCI being multiplexed with HARQ-ACK UCI1 and HARQ-ACK UCI2 in the same way (e.g. so in effect same SR UCI bits are transmitted with both HARQ-ACK UCI1 and HARQ-ACK UCI2), for example when HARQ-ACK UCI1 and HARQ-ACK UCI2 have the same priority level, and in some cases this may result in the SR UCI being multiplexed with HARQ-ACK UCI1 and HARQ-ACK UCI2 in different ways (e.g. so in effect different SR UCI bits are transmitted with HARQ-ACK UCI1 and HARQ-ACK UCI2), for example when HARQ-ACK UCI1 and HARQ-ACK UCI2 have different priority levels there may be fewer bits used for SR UCI to allow for more bits to be used for whichever of HARQ-ACK UCI1 and HARQ-ACK UCI2 has the highest priority. In other example implementations, if the SR UCI comprises multiple bits, a first portion of SR UCI may be multiplexed with HARQ-ACK UCI1 while a second portion of SR UCI may be multiplexed with HARQ-ACK UCI2 (i.e. the multiplexing of SR UCI is split across both HARQ-ACK UCI1 and HARQ-ACK UCI2 rather than being separately multiplexed with each independently). For example, a number of bits of the SR UCI may be multiplexed into a selected one of HARQ-ACK UCI1 and HARQ-ACK UCI2 until a maximum allowed code rate for the selected one of HARQ-ACK UCI1 and HARQ-ACK UCI2 is reached with the remaining contents of the SR UCI being multiplexed into the other one of HARQ-ACK UCI1 and HARQ-ACK UCI2. The selected one of HARQ-ACK UCI1 and HARQ-ACK UCI2 may be based on one more of: the timing of the corresponding PUCCHs, for example, the selected one of HARQ-ACK UCI1 and HARQ-ACK UCI2 may be the earliest one; the remaining capacity for the set of radio resources for the respective ones of HARQ-ACK UCI1 and HARQ-ACK UCI2, for example the selected one of HARQ-ACK UCI1 and HARQ-ACK UCI2 may be the one with greatest spare capacity; and the maximum potential capacity for the set of radio resources for the respective ones of HARQ-ACK UCI1 and HARQ-ACK UCI2, for example the selected one of HARQ-ACK UCI1 and HARQ-ACK UCI2 may be the one with greatest maximum potential capacity.

(iii) Example approaches for selectively determining multiplexing of uplink control information

As noted above, in accordance with certain embodiments of the disclosure a terminal device may be configured to selectively multiplex first uplink control information (e.g. SR UCI) and second uplink control information (e.g. HARQ-ACK UCI) in a way which takes account of their respective priority levels. Some general considerations for determining how to multiplex uplink control data in accordance with certain examples of the disclosure include seeking to maintain an acceptable level of reliability and latency of the multiplexed UCI, for example having regard to the reliability and latency requirements of the highest priority UCI.

In accordance with one example scenario a terminal device may determine that first uplink control information (which in this example is assumed to comprise SR UCI) associated with a first priority level should be sent using a first set of radio resources corresponding to a first PUCCH and that second uplink control information (which in this example is assumed to comprise HARQ-ACK UCI) associated with a second priority level should be sent using a second set of radio resources corresponding to a second PUCCH, and that there is an overlap in the first and second sets of radio resources. This scenario may happen in accordance with the normal operation of the terminal device and the specific reasons why the scenario has arisen, for example in terms of the specific content of the UCIs, is not relevant to the principles discussed herein.

In one example, the decision on whether or not to multiplex the SR UCI and the HARQ-ACK UCI onto one or other of the first PUCCH and second PUCCH may take account of the resulting code rate for the multiplexed UCI on the selected PUCCH (which may be referred to herein as the multiplexed PUCCH). For example, if the code rate of the multiplexed PUCCH would be lower or equal to a predetermined threshold code rate (i.e. the code rate that would be applied to the 3rd PUCCH after the multiplexing operation is lower or equal to a predetermined value), the UCIs may be multiplexed and transmitted on the multiplexed PUCCH. In one example the predetermined threshold code rate is the lower of a code rate associated with the SR UCI (if transmitted on the first PUCCH) and a code rate associated with the HARQ-ACK UCI (if it were transmitted on the first PUCCH). In a case where none of the PUCCH can meet the code rate threshold, then the terminal device may select the lower priority UCI to drop / compress.

In some examples, if transmitting the SR UCI and the HARQ-ACK UCI on the multiplexed PUCCH would exceed the predetermined threshold code rate, the terminal device may be configured to multiplex the UCIs in such a way that reduces the number of bits used for the lower priority UCI (e.g. by dropping some of the bits for the lower priority UCI or by applying data compression to the bits for the lower priority UCI).

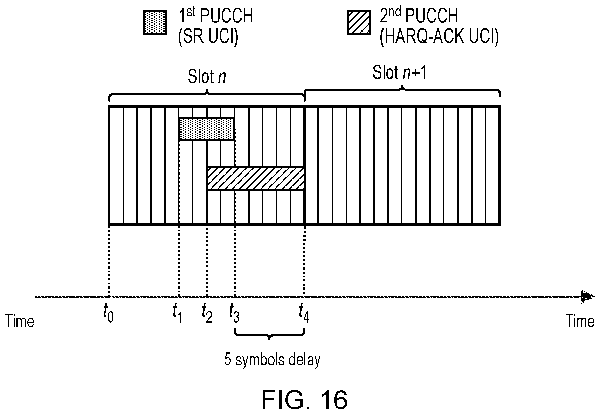

In one example, the decision on whether or not to multiplex the SR UCI and the HARQ-ACK UCI onto one or other of the first PUCCH and second PUCCH may take account of any consequent delays in the transmission of the SR UCI and / or the HARQ-ACK UCI, and an example implementation scenario for this is discussed with reference to Figure 16.

Figure 16 schematically shows a portion of an uplink radio resource grid representing radio resources in time (horizontal axis) and frequency (vertical axis) for one example implementation of an approach according to an example of the disclosure. Figure 16 schematically shows radio resources scheduled for use by a terminal device for UCI in an example scenario during a period spanning two slots (identified in Figure 16 as slots n and n+1). In this example it is assumed a first PUCCH (which in this example is assumed to be for an SR UCI) is scheduled between times t1 and t3 (which is in slot n) and a second PUCCH (which in this example is assumed to be for a HARQ-ACK UCI) is scheduled between times t2 and t4 (which is again in slot n). Because the radio resources defined by the respective PUCCHs for the SR UCI and the HARQ-ACK UCI overlap in time, the terminal device determines whether to multiplex the UCIs. In this example it can be seen that multiplexing the SR UCI onto the HARQ-ACK UCI would result in completion of transmission for the SR UCI at time t4, which is five symbols after the end of its initially scheduled transmission on the first PUCCH. Whether or not this is acceptable will depend on the latency requirements for the earliest of the UCIs. Thus, in accordance with certain embodiments of the disclosure, the terminal device will choose not to multiplex the SR UCI and the HARQ UCI if it would result in a transmission delay for the SR UCI which is greater than a predetermined threshold delay. For example, if the allowed delay were three symbols for the SR UCI, the terminal device would choose not to multiplex the SR UCI onto the HARQ UCI and would instead transmit the SR UCI on the first PUCCH if the SR UCI has higher priority than the HARQ UCI, otherwise the HARQ UCI is transmitted.

In accordance with some embodiments of the disclosure the multiplexed PUCCH (i.e. the PUCCH used to transmit the multiplexed UCIs) is a selected one of the first PUCCH and the second PUCCH and is chosen to be the one that would result in the lowest latency. That is to say, the multiplexed PUCCH (selected PUCCH) is the PUCCH which ends first in time. This approach may be beneficial in a scenario where the SR UCI and HARQ-ACK UCI have equal priority level and so the terminal device acts to transmit both UCI, through multiplexing, rather than dropping one of them.

In accordance with some embodiments of the disclosure the multiplexed PUCCH (i.e. the PUCCH used to transmit the multiplexed UCIs) is a selected one of the first PUCCH and the second PUCCH and is chosen to be the one that would result in the lowest code rate (highest reliability) for transmitting the multiplexed UCI. This approach may be beneficial in a scenario where the SR UCI and HARQ-ACK UCI have equal priority level and so the terminal acts to transmit, through multiplexing, both UCI rather than dropping one of them.

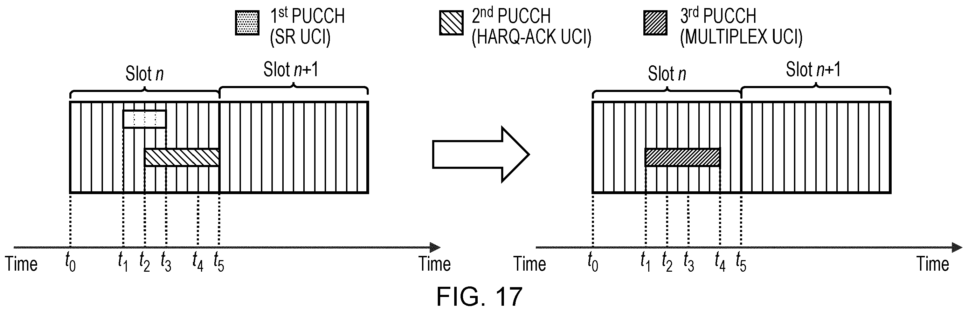

In accordance with some embodiments of the disclosure the multiplexed PUCCH (i.e. the PUCCH used to transmit the multiplexed UCIs) is not a selected one of the first PUCCH and the second PUCCH but is a different PUCCH associated with a different set of radio resources, and an example implementation scenario for this is discussed with reference to Figure 17.

Figure 17 schematically shows two versions of a portion of an uplink radio resource grid representing radio resources in time (horizontal axis) and frequency (vertical axis) for one example implementation of an approach according to an example of the disclosure. Figure 17 schematically shows radio resources scheduled for use by a terminal device for UCI in an example scenario during a period spanning two slots (identified in Figure 17 as slots n and n+1).

The left-hand representation of the portion of the uplink radio resource grid in Figure 17 indicates example sets of radio resources scheduled for transmitting two types of UCI and the right-hand representation of the portion of the uplink radio resource grid in Figure 17 indicates an example set of radio resources used for transmitting the two types of UCI in a multiplexed manner. Thus, in this example it is assumed a first PUCCH (which in this example is assumed to be for an SR UCI) is scheduled between times t1 and t3 (which is in slot n) and a second PUCCH (which in this example is assumed to be for a HARQ-ACK UCI) is scheduled between times t2 and t5 (which is again in slot n). Because the radio resources defined by the respective PUCCHs for the SR UCI and the HARQ-ACK UCI overlap in time, the terminal device determines to multiplex the UCIs. However, and as indicated in the right-hand representation of the portion of the uplink radio resource grid in Figure 17, rather than using one or other of the scheduled set of radio resources for transmitting the SR UCI or the HARQ-ACK UCI, the terminal device uses a different set of radio resources for transmitting the multiplexed SR UCI and HARQ-ACK UCI, and in particular for this example uses a set of radio resources between t1 and t4. In accordance with this example the terminal device uses the PUCCH frequency resource and format of the most reliable PUCCH (in this case the second PUCCH) while starting at the earliest of the start times for the first and second PUCCHs. This approach can be beneficial in a scenario where the SR UCI and HARQ-ACK UCI have equal priority level and so the terminal device acts to transmit both UCI rather than dropping one of them.

In some examples the UCI associated with the highest priority level is an SR UCI.

In some examples, if conditions for determining whether to multiplex the UCIs are not met (i.e. the multiplexing conditions are not satisfied), the UCI having the lowest priority is not transmitted.

The multiplexing conditions may depend on a transmission format associated with the multiplexed PUCCH (i.e. the transmission format associated with the set of radio resources used to transmit the multiplexed UCIs) as explained below. For this explanation it will be assumed there is an overlap in a first set of radio resources associated with a first PUCCH for transmitting SR UCI and a second set of radio resources associated with a second PUCCH for transmitting HARQ-ACK UCI.

PUCCH Format 0

In some examples, if the SR is positive it is multiplexed with the HARQ-ACK UCI on the second PUCCH if the second PUCCH uses PUCCH Format 0, regardless of the priority of the SR UCI. Thus the multiplexed UCI (SR + HARQ-ACK) is transmitted using the resources for the second PUCCH. This approach recognises that since a positive high priority SR is always transmitted, the detection reliability of the second PUCCH carrying HARQ-ACK using PUCCH Format 0 can be expected to take into account the possibility of an SR transmission. Hence, whether the SR is of high priority or low priority, it will not affect the detection reliability of the second PUCCH.

Note, a negative SR is not transmitted and so it is not multiplexed with the second UCI (in effect there is nothing to multiplex).

In another example, when an SR is carried by a first PUCCH using PUCCH Format 0 and a second UCI containing HARQ-ACK is carried by a second PUCCH using Format 0, and these PUCCH collide in time, the SR UCI and HARQ-ACK UCI are multiplexed forming a multiplexed UCI carried by whichever of the first and second PUCCH is the earliest. That is to say the multiplexed PUCCH is the first PUCCH if the first PUCCH is transmitted earlier than the second PUCCH and the second PUCCH if the second PUCCH is transmitted earlier than the first PUCCH. This approach helps to allow the SR and HARQ-ACK to be transmitted as soon as possible.

PUCCH Format 1

In legacy systems, when SR UCI is carried by a first PUCCH using PUCCH Format 0 and a second UCI containing HARQ-ACK is carried by a second PUCCH using PUCCH Format 1 and these collide in time, the SR UCI is not transmitted. However, this behaviour may not be appropriate if the SR UCI is associated with a high priority service, for example URLLC service, because of the potential negative impact on latency.

Thus, in some examples, when a positive SR of high priority is carried by a first PUCCH using PUCCH Format 0 and a second UCI containing HARQ-ACK is carried by a second PUCCH using PUCCH Format 1 and these PUCCH collide in time, if the second UCI is of low priority, then only the SR using the first PUCCH is transmitted. The low priority HARQ-ACK in the second UCI may, for example, belong to an eMBB service which is delay tolerant.

In another example, when a positive SR of high priority is carried by a first PUCCH using PUCCH Format 0 and a second UCI containing HARQ-ACK is carried by a second PUCCH using PUCCH Format 1 and these PUCCH collide in time, then the positive SR is multiplexed with the HARQ-ACK and transmitted using the first PUCCH using PUCCH Format 0 (i.e. the multiplexed PUCCH is the first PUCCH). The multiplexed UCI may, for example, use different cyclic shifts to indicate the different HARQ-ACK status and the positive SR status, for example along the lines shown in Table 3 above. While it can be seen for this approach that a cyclic shift mCS = 0 can represent either {+ve SR}, {NACK, +ve SR} and {NACK, NACK, +ve SR}, this can be resolved at the network since the network will be aware of the PUCCH collision and the number of HARQ-ACK expected. It may be noted a terminal device may miss a DL Grant (and hence be unaware that the network is expecting any corresponding ACK/NACK signalling) and in this case a cyclic shift of mCS does not allow the network to resolve whether the terminal device missed the DL Grant or has failed to decode the PDSCH. However, it may be expected this scenario will be rare for high priority services since the PDCCH detection/decoding is expected to be configured for high reliability, for example 99.9999% reliability. If the SR is negative then only HARQ-ACK UCI is transmitted using the second PUCCH in line with legacy behaviour. It should be noted that this approach may be adopted regardless of whether the HARQ-ACK UCI is associated with a high priority or low priority service.

In another example, when a positive SR of high priority is carried by a first PUCCH using PUCCH Format 0 and a second UCI containing HARQ-ACK is carried by a second PUCCH using PUCCH Format 1 and these PUCCH collide in time, and the second UCI is of high priority, the SR UCI using the first PUCCH is transmitted if the HARQ-ACKs in the second PUCCH are all ACKs (positive acknowledgement). Otherwise only the HARQ-ACK using the second PUCCH is transmitted. That is to say the HARQ-ACK(s) in the second PUCCH are bundled using logical AND such that (i) if the bundled HARQ-ACK is positive, then only the positive SR is transmitted using the first PUCCH; and (ii) if the bundled HARQ-ACK is negative, then only the HARQ-ACKs are transmitted using the second PUCCH. This approach recognises that high priority (e.g. URLLC) PDSCH transmissions are highly likely to be decoded correctly given they are configured to meet high reliability requirements, and so their corresponding HARQ-ACKs are likely to be positive. It should also be noted that the network is aware of the PUCCH collision and so a single positive SR transmission using the first PUCCH provides an indication to the network that all PDSCH transmissions are ACK and there is a positive SR. If the SR is negative then only the second PUCCH is transmitted as per legacy behaviour. In some examples, if the network receives HARQ ACK signalling that indicates at least some negative acknowledgement, the network may speculatively allocate PUSCH resources for the terminal device in the same way as it would if it had received SR UCI signalling. Given that the URLLC PDSCH is highly reliable, as previously discussed, the likelihood of receiving NACK via the HARQ signalling may be assumed to be relatively low, and hence the network would seldom need to perform this speculative PUSCH allocation. Hence the speculative allocation of PUSCH in such circumstances may be expected not to have a significant impact on spectral efficiency, but would help allow the telecommunication network to handle both errored PDSCH and scheduling PUSCH, while making efficient use of PUCCH resources.

### PUCCH Format 2, Format 3 or Format 4

The following approaches may be applied in cases where the said second PUCCH uses either PUCCH Format 2, Format 3 or Format 4. As discussed above, $O_{SR}$ bits indicating an index to a SILT table with $K_{SR}+1$ entries, may be appended to the second UCI carrying HARQ-ACK and/or CSI.

In one example approach the size of the SILT (SR Indication Lookup Table) may be reduced. In this case a subset of the $K_{SR}$ SRs, i.e. $K_{SR-Reduced}$ number of SRs, are selected to form a Reduced SILT. A Reduced SILT can be used with fewer $O_{SR}$ bits, which would then reduce the overall UCI bits ($N_{UCI}$) to be transmitted in the multiplexed UCI.

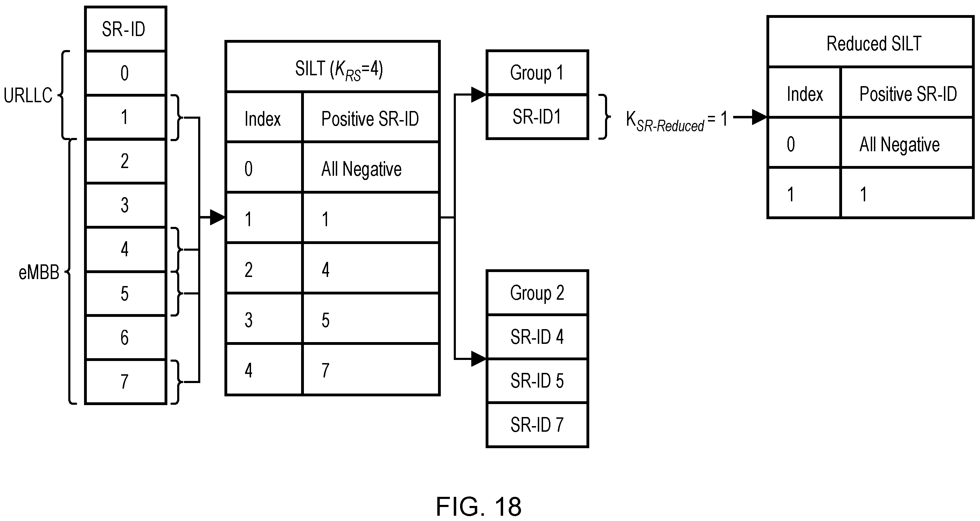

In some examples the $K_{SR}$ SRs may be divided into SR priority Groups and SR-IDs in selected Groups may be used to form the Reduced SILT. A schematic example for this is represented in Figure 18 which shows an example in which 8 SR-IDs are configured {0, 1, 2, 3, 4, 5, 6, 7} by the network with SR-ID {0, 1} mapped to LCIDs that provide URLLC (or other relatively high priority) services and SR-ID {2, 3, 4, 5, 6, 7} are mapped to LCIDs that provide eMBB (or other relatively low priority) services. Now suppose in a particular time unit (e.g. in a specific slot or sub-slot), four of these SR-IDs {1, 4, 5, 7} collide due to their being configured with time resources and periodicities that cause collision (note in this context the collision does not mean that all the SRs are necessarily positive and to be transmitted, but only that their PUCCH transmission opportunities collide in time), thus $K_{SR}=4$. In a legacy approach, the SILT will have $K_{SR}+1$ entries. However, in accordance with certain embodiments of the disclosure, these $K_{SR}$ SRs are divided into two groups - Group 1 and Group 2 - based on the priority of their LCIDs, e.g. Group 1 may contain SR-IDs serving a relatively high priority service (e.g. URLLC) and Group 2 may contain SR-IDs serving a relatively low priority service (e.g. eMBB) such that Group 1 has higher priority than Group 2. Therefore in this example, Group 1 consists of SR-ID {1} and Group 2 consists of SR-IDs {4, 5, 7}. In this example the higher priority group is used to form the Reduced SILT, i.e. the Reduced SILT consists of only SR-ID = 1, where $K_{RS-Reduced} = 1$. The Reduced SILT requires $O_{SR} = ceiling(log_2(K_{SR-Reduced}+1)) = 1$ bit as compared to a legacy SILT which would requires $O_{SR} = ceiling(log_2(K_{SR}+1)) = 3$ bits. Thus in this embodiment, the number of $O_{SR}$ bits appended to the second UCI may be reduced by dropping SR-IDs that are low priority.

In another example the selected subset of SRs may have SR-IDs that have equal or higher priority than that of the second UCI.

In another example, the Reduced SILT may be used if $ceiling(log_2(K_{SR} +1)) - ceiling(log_2(K_{SR-Reduced}+1)) > T_{SR}$,

where $T_{SR}$ is a pre-determined threshold. That is to say, SR-IDs are only removed from the legacy SILT if it leads to at least a threshold reduction in the number of SR bits $O_{SR}$, otherwise there is no reduction of any SR-IDs. For example, if we assume for one implementation that $T_{SR} = 0$, $K_{SR} = 6$ and $K_{SR-Reduced} = 4$. We have:

The number of SR bits in the legacy SILT, $O_{SR-Legacy} = ceiling(log_2(KSR +1)) = 3$ bits and the number of SR bits in the Reduced SILT, $O_{SR-Reduced} = ceiling(log_2(K_{SR-Reduced}+1)) = 3$ bits.

Since $O_{SR-Legacy} = OS_{R-Reduced} = 3$ bits (i.e. the difference is not greater than $T_{SR}$), there is no reduction in the number of SR bits when the number of entries is reduced. Hence there is no advantage in removing any SR-IDs and therefore all the SR-IDs are included in the SILT.

In another example, SR-IDs are removed from the SILT if the total number of UCI bits $N_{UCI}$ causes the multiplexed PUCCH to exceed the maximum code rate $R_{UCI}$. As described previously, the terminal device may determine the number of RBs $M_{RB-PUCCH}$ used in the PUCCH with PUCCH Format 2 or Format 3, and it is possible that $M_{RB-PUCCH} = M_{RB-MAX}$ with a code rate exceeding the maximum code rate. That is to say, even using the maximum number of RBs, the PUCCH may fail to undershoot the maximum code rate limit. In legacy systems the terminal device would transmit the PUCCH despite exceeding the maximum code rate. However, for some examples of the disclosure it is determined this may not be acceptable for certain high priority services, such as URLLC, where reliability is particularly important. Thus in some examples, the terminal device may remove some of the SR-IDs in the SILT to reduce the SR bits $O_{SR}$ so that the maximum code rate is not exceeded. That is to say, the number of bits in $O_{SR}$ may be reduced until the following conditions are met:

$$(O_{ACK} + O_{SR} + O_{CRC}) \leq (M_{RB-MAX} \times N_{SC-RB} \times N_{Symbol-PUCCH} \times Q_m \times R_{UcI}),$$

$$(O_{ACK} + O_{SR} + O_{CRC}) > ((M_{RB-MAX} - 1) \times N_{SC-RB} \times N_{Symbol-PUCCH} \times Q_m \times R_{UCI}),$$

The reduction of the $O_{SR}$ bits can be done using the following approaches, for example:

(i) the SR-IDs associated with the lowest priorities are removed one by one until the code rate requirement is met

(ii) a group of SR-IDs with the lowest priorities are removed until the code rate requirement is met. Since groups of SR-IDs are removed, this approach could lead to over reduction of the SR-IDs

(iii) SR-IDs deemed as low priority are removed but SR-IDs deemed as high priority are retained, even if they cause the maximum code rate to be exceeded.

In another example, the ALL Negative SR indication in the SILT may be removed. That is to say, if the terminal device does not have any positive SRs, nothing is appended to the end of the second UCI. This will reduce the SILT size by 1 entry. The ALL Negative SR is thus indicated by the absence of any $O_{SR}$ bits (i.e. $O_{SR}=0$) in the second UCI and the network may blind decode for any appended SR bits in the second UCI. That is to say, if none of the SR-IDs in the SILT is positive, no SR bits are transmitted.

In another example, the ALL Negative SR indication in the SILT is removed if it leads to a reduction of the overall number of $O_{SR}$ bits. That is the ALL Negative SR indication is removed if $ceiling(log_2(K_{SR} +1)) > ceiling(log_2(K_{SR}))$.

In another example, $O_{SR}$ is always 1 bit. That is to say, only 1 bit is appended to the second UCI. The $O_{SR}$ bit would represent the SR-ID with the highest priority among the $K_{SR}$ SD-IDs if this highest priority SR-ID is positive. If the highest priority SR-ID is not positive then either: a "0" is appended to the second UCI or nothing is appended to the second UCI.

In another example, $O_{SR}$ is always 1 bit and it only represents a single SR-ID. That is to say, if this SR-ID is not present in the $K_{SR}$ SR-IDs then nothing is appended to the second UCI. The single SR-ID can be the SR-ID that is mapped to the URLLC (or other high priority) service. If the single SR-ID is present in the $K_{SR}$ SR-IDs and it is positive then a "1" is appended to the second UCI, otherwise if the SR-ID is negative then either a "0" is appended to the second UCI or nothing is appended to the second UCI.

For example, if SR-ID=2 maps to a URLLC service and all other SR-IDs map to other non-URLLC services, then assuming that at a specific point in time, $K_{SR}=4$ and the SR-IDs in the SILT = {3, 4, 5, 6}, then nothing is appended to the second UCI since none of these SR-IDs are associated with a URLLC service. On other hand if the SR-IDs in the SILT = {2, 3, 5, 6} then $O_{SR}=1$ bit is appended to the second UCI which can, for example, indicate "0" if SR-ID=2 is negative or "1" if SR-ID=2 is positive.

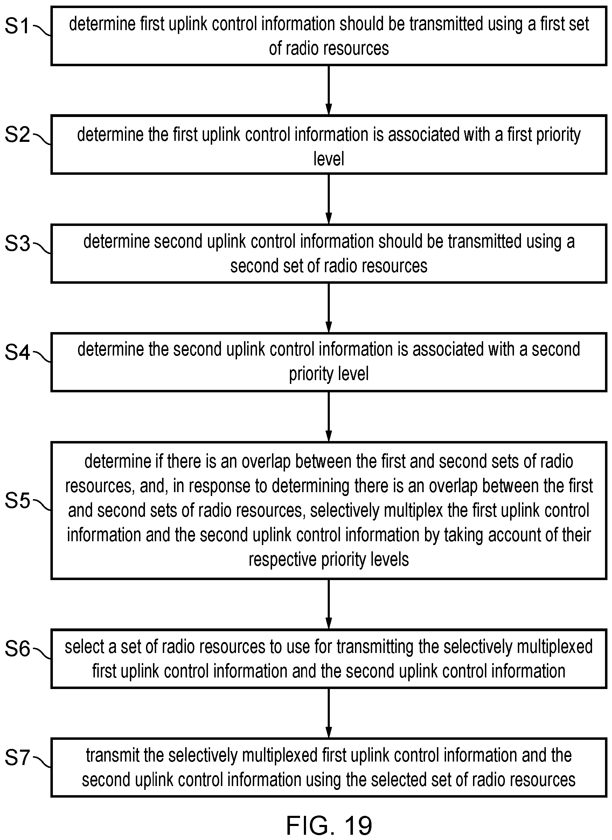

Figure 19 is a flow diagram schematically representing some aspects of a method of operation for a terminal device in a wireless telecommunication system in accordance with certain embodiments of the disclosure.

In a first step, S1, the terminal device determines first uplink control information should be transmitted using a first set of radio resources.

In a second step, S2, the terminal device determines the first uplink control information is associated with a first priority level.

In a third step, S3, the terminal device determines second uplink control information should be transmitted using a second set of radio resources.

In a fourth step, S4, the terminal device determines the second uplink control information is associated with a second priority level.

In a fifth step, S5, the terminal device determines if there is an overlap between the first and second sets of radio resources, and, in response to determining there is an overlap between the first and second sets of radio resources, selectively multiplexes the first uplink control information and the second uplink control information by taking account of their respective priority levels.

In a sixth step, S6, the terminal device selects a set of radio resources to use for transmitting the selectively multiplexed first uplink control information and the second uplink control information.

In a seventh step, S7, the terminal device transmits the selectively multiplexed first uplink control information and the second uplink control information using the selected set of radio resources.

Thus there has been described a method of operating a terminal device in a wireless telecommunications system, the method comprising: determining first uplink control information should be transmitted using a first set of radio resources; determining the first uplink control information is associated with a first priority level; determining second uplink control information should be transmitted using a second set of radio resources; determining the second uplink control information is associated with a second priority level; determining if there is an overlap between the first and second sets of radio resources, and, in response to determining there is an overlap between the first and second sets of radio resources, selectively multiplexing the first uplink control information and the second uplink control information by taking account of their respective priority levels; selecting a set of radio resources to use for transmitting the selectively multiplexed first uplink control information and the second uplink control information; and transmitting the selectively multiplexed first uplink control information and the second uplink control information using the selected set of radio resources.

It will be appreciated that while the present disclosure has in some respects focused on implementations in an LTE-based and / or 5G network for the sake of providing specific examples, the same principles can be applied to other wireless telecommunications systems. Thus, even though the terminology used herein is generally the same or similar to that of the LTE and 5G standards, the teachings are not limited to the present versions of LTE and 5G and could apply equally to any appropriate arrangement not based on LTE or 5G and / or compliant with any other future version of an LTE, 5G or other standard.

It may be noted various example approaches discussed herein may rely on information which is predetermined / predefined in the sense of being known by both the base station and the terminal device. It will be appreciated such predetermined / predefined information may in general be established, for example, by definition in an operating standard for the wireless telecommunication system, or in previously exchanged signalling between the base station and terminal devices, for example in system information signalling, or in association with radio resource control setup signalling. That is to say, the specific manner in which the relevant predefined information is established and shared between the various elements of the wireless telecommunications system is not of primary significance to the principles of operation described herein.

It may further be noted various example approaches discussed herein rely on information which is exchanged / communicated between various elements of the wireless telecommunications system and it will be appreciated such communications may in general be made in accordance with conventional techniques, for example in terms of specific signalling protocols and the type of communication channel used, unless the context demands otherwise. That is to say, the specific manner in which the relevant information is exchanged between the various elements of the wireless telecommunications system is not of primary significance to the principles of operation described herein.

Respective features of the present disclosure are defined by the following numbered paragraphs:

Paragraph 1. A method of operating a terminal device in a wireless telecommunications system, the method comprising: determining first uplink control information should be transmitted using a first set of radio resources; determining the first uplink control information is associated with a first priority level; determining second uplink control information should be transmitted using a second set of radio resources; determining the second uplink control information is associated with a second priority level; determining if there is an overlap between the first and second sets of radio resources, and, in response to determining there is an overlap between the first and second sets of radio resources, selectively multiplexing the first uplink control information and the second uplink control information by taking account of their respective priority levels; selecting a set of radio resources to use for transmitting the selectively multiplexed first uplink control information and the second uplink control information; and transmitting the selectively multiplexed first uplink control information and the second uplink control information using the selected set of radio resources.

Paragraph 2. The method of any of paragraphs 1 to , wherein the selected set of radio resources to use for transmitting the selectively multiplexed first uplink control information and the second uplink control information is a selected one of the first set of radio resources and the second set of radio resources.

Paragraph 3. The method of paragraph 2, wherein the selected one of the first set of radio resources and the second set of radio resources is the one which finishes earliest in time.

Paragraph 4. The method of paragraph 2, wherein the selected one of the first set of radio resources and the second set of radio resources is the one which would result in the multiplexed first uplink control information and second uplink control information being transmitted with the lowest code rate.

Paragraph 5. The method of any of paragraphs 1 to 4, wherein the selected set of radio resources to use for transmitting the selectively multiplexed first uplink control information and the second uplink control information is a third set of radio resources which is different from the first set of radio resources and the second set of radio resources.

Paragraph 6. The method of paragraph 5, wherein the third set of radio resources is selected to start at the earliest of the start times for the first set of radio resources and the second set of radio resources.

Paragraph 7. The method of any of paragraphs 1 to 6, wherein the multiplexed first uplink control information and second uplink control information are transmitted using a transmission format selected to match that associated with the one of the first set of radio resources and the second set of radio resources which results in the multiplexed first uplink control information and second uplink control information being transmitted with the lowest code rate.

Paragraph 8. The method of any of paragraphs 1 to 7, wherein the first uplink control information comprises a scheduling request.

Paragraph 9. The method of paragraph 8, wherein the first priority level is determined from a scheduling request identifier for the scheduling request.

Paragraph 10. The method of paragraph 9, wherein the first priority level is determined from a transmission periodicity configured for the scheduling request identifier.

Paragraph 11. The method of any of paragraphs 1 to 10, wherein the second uplink control information comprises acknowledgement signalling in respect of previous downlink signalling. Paragraph 12. The method of any of paragraphs 1 to 11, wherein the second priority level is determined from an indication received in association with a resource allocation message for the previous downlink signalling.

Paragraph 13. The method of any of paragraphs 1 to 12, wherein the first priority level is determined from a service type for the first uplink control information and / or the second priority level is determined from a service type for the second uplink control information.

Paragraph 14. The method of any of paragraphs 1 to 13, wherein the first priority level is determined from the first set of radio resources and / or the second priority level is determined from the second set of radio resources.

Paragraph 15. The method of any of paragraphs 1 to 14, wherein the first uplink control information is classified as high priority data or as low priority data based on a comparison of the first priority level with a first predefined threshold priority level and / or the second uplink control information is classified as high priority data or as low priority data based on a comparison of the second priority level with a second predefined threshold priority level.

Paragraph 16. The method of any of paragraphs 1 to 15, further comprising determining a maximum allowable code rate for the first uplink control information and determining the first priority level from the maximum allowable code rate for the first uplink control information and / or determining a maximum allowable code rate for the second uplink control information and determining the second priority level from the maximum allowable code rate for the second uplink control information.

Paragraph 17. The method of any of paragraphs 1 to 16, wherein the first priority level is determined from a time duration for the first set of radio resources and / or the second priority level is determined from a time duration for the second set of radio resources.

Paragraph 18. The method of any of paragraphs 1 to 17, wherein the first priority level is determined from a transmission format for the first uplink control information and / or the second priority level is determined from a transmission format for the second uplink control information.

Paragraph 19. The method of any of paragraphs 1 to 18, wherein the first priority level is determined from an indication received in association with the first uplink control information from a Medium Access Control layer for the terminal device and / or the second priority level is determined from an indication received in association with the second uplink control information from a Medium Access Control layer for the terminal device.

Paragraph 20. The method of any of paragraphs 1 to 19, wherein the first set of radio resources is associated with a first temporal granularity and the first priority level is determined from first temporal granularity and / or the second set of radio resources is associated with a second temporal granularity and the second priority level is determined from second temporal granularity.

Paragraph 21. The method of any of paragraphs 1 to 20, further comprising: determining third uplink control information should be transmitted using a third set of radio resources; determining there is an overlap between the first and third sets of radio resources as well as an overlap between the first and second sets of radio resources, and wherein the second set of radio resources is the one of the second set of radio resources and third set of radio resources that is earliest in time.

Paragraph 22. The method of any of paragraphs 1 to 21, further comprising: determining third uplink control information should be transmitted using a third set of radio resources; determining there is an overlap between the first and third sets of radio resources as well as an overlap between the first and second sets of radio resources, and wherein the second set of radio resources is the one of the second set of radio resources and third set of radio resources that is latest in time.

Paragraph 23. The method of any of paragraphs 1 to 22, further comprising: determining third uplink control information should be transmitted using a third set of radio resources; determining there is an overlap between the first and third sets of radio resources as well as an overlap between the first and second sets of radio resources, and wherein the second set of radio resources is the one of the second set of radio resources and third set of radio resources that has the greatest capacity for transmitting uplink control information.

Paragraph 24. The method of any of paragraphs 1 to 23, further comprising: determining third uplink control information should be transmitted using a third set of radio resources; determining there is an overlap between the first and third sets of radio resources as well as an overlap between the first and second sets of radio resources, and wherein the second set of radio resources is the one of the second set of radio resources and third set of radio resources that is associated with the lowest code rate.

Paragraph 25. The method of any of paragraphs 1 to 24, further comprising: determining third uplink control information should be transmitted using a third set of radio resources; determining if there is an overlap between the first and third sets of radio resources as well as an overlap between the first and second sets of radio resources, and in response to determining there is an overlap between the first and second sets of radio resources and between the first and third sets of radio resources, selectively multiplexing the first uplink control information and the third uplink control information; selecting a set of radio resources to use for transmitting the selectively multiplexed first uplink control information and the third uplink control information; and transmitting the selectively multiplexed first uplink control information and the third uplink control information using the selected set of radio resources.

Paragraph 26. The method of paragraph 25, wherein the first uplink control information is independently selectively multiplexed with both the second uplink control information and the third uplink control information.

Paragraph 27. The method of paragraph 25, wherein a first part of the first uplink control information is selectively multiplexed with the second uplink control information, and a second part of the first uplink control information, which is different from the first part, is selectively multiplexed with the third uplink control information.

Paragraph 28. The method of any of paragraphs 1 to 27, wherein selectively multiplexing the first uplink control information and the second uplink control information comprises multiplexing the first uplink control information and the second uplink control information if the resulting multiplexed uplink control information is associated with a code rate less than a predetermined threshold code rate when transmitted on the selected set of radio resources.

Paragraph 29. The method of any of paragraphs 1 to 28, wherein selectively multiplexing the first uplink control information and the second uplink control information comprises dropping and / or compressing some of the information bits of whichever of the first and second uplink control information is associated with the lowest priority level prior to multiplexing.

Paragraph 30. The method of any of paragraphs 1 to 29, wherein selectively multiplexing the first uplink control information and the second uplink control information comprises not multiplexing the first uplink control information and the second uplink control information together if it would result in a delay of the transmission of either the first uplink control information or the second uplink control information by more than a predetermined threshold delay.

Paragraph 31. A terminal device for use in a wireless telecommunication system, wherein the terminal device comprises controller circuitry and transceiver circuitry configured to operate together such that the terminal device is operable to: determine first uplink control information should be transmitted using a first set of radio resources; determine the first uplink control information is associated with a first priority level; determine second uplink control information should be transmitted using a second set of radio resources; determine the second uplink control information is associated with a second priority level; determine if there is an overlap between the first and second sets of radio resources, and, in response to determining there is an overlap between the first and second sets of radio resources, selectively multiplex the first uplink control information and the second uplink control information by taking account of their respective priority levels; select a set of radio resources to use for transmitting the selectively multiplexed first uplink control information and the second uplink control information; and transmit the selectively multiplexed first uplink control information and the second uplink control information using the selected set of radio resources.

Paragraph 32. Circuitry for a terminal device for use in a wireless telecommunication system, wherein the circuitry comprises controller circuitry and transceiver circuitry configured to operate together such that the circuitry is operable to cause the terminal device to determine first uplink control information should be transmitted using a first set of radio resources; determine the first uplink control information is associated with a first priority level; determine second uplink control information should be transmitted using a second set of radio resources; determine the second uplink control information is associated with a second priority level; determine if there is an overlap between the first and second sets of radio resources, and, in response to determining there is an overlap between the first and second sets of radio resources, selectively multiplex the first uplink control information and the second uplink control information by taking account of their respective priority levels; select a set of radio resources to use for transmitting the selectively multiplexed first uplink control information and the second uplink control information; and transmit the selectively multiplexed first uplink control information and the second uplink control information using the selected set of radio resources.

Paragraph 33. A method of operating network infrastructure equipment in a wireless telecommunications system, the method comprising: receiving, from a terminal device, uplink control information, wherein the uplink control information comprises acknowledgement signalling in respect of one or more previous transmissions of downlink signalling from the network infrastructure equipment to the terminal device; determining the uplink control information indicates at least one of the one or more previous transmissions of downlink signalling from the network infrastructure equipment to the terminal device has not been successfully received by the terminal device; and, in response to this, and allocating radio resources for the terminal device to transmit uplink data in the same way as if the terminal device had sent uplink control information comprising a scheduling request.

Paragraph 34. A method according to paragraph 33, the method comprising determining that the uplink radio resources overlap with second uplink radio resources allocated for the transmission of second uplink control information by the terminal device, wherein the allocating the radio resources for the terminal device to transmit the uplink data is in response to the determining that the uplink radio resources overlap with the second uplink radio resources allocated for the transmission of the second uplink control information by the terminal device.

Paragraph 35. Network infrastructure equipment for use in a wireless telecommunication system, wherein the network infrastructure equipment comprises controller circuitry and transceiver circuitry configured to operate together such that the network infrastructure equipment is operable to: receive, from a terminal device, uplink control information transmitted using uplink radio resources, wherein the uplink control information comprises acknowledgement signalling in respect of one or more previous transmissions of downlink signalling from the network infrastructure equipment to the terminal device; determine the uplink control information indicates at least one of the one or more previous transmissions of downlink signalling from the network infrastructure equipment to the terminal device has not been successfully received by the terminal device; and, in response to this, allocate radio resources for the terminal device to transmit uplink data in the same way as if the terminal device had sent uplink control information comprising a scheduling request.

Paragraph 36. Circuitry for network infrastructure equipment for use in a wireless telecommunication system, wherein the circuitry comprises controller circuitry and transceiver circuitry configured to operate together such that the circuitry is operable to cause the network infrastructure equipment to: receive, from a terminal device, uplink control information transmitted using uplink radio resources, wherein the uplink control information comprises acknowledgement signalling in respect of one or more previous transmissions of downlink signalling from the network infrastructure equipment to the terminal device; determine the uplink control information indicates at least one of the one or more previous transmissions of downlink signalling from the network infrastructure equipment to the terminal device has not been successfully received by the terminal device; and, in response to this, allocate radio resources for the terminal device to transmit uplink data in the same way as if the terminal device had sent uplink control information comprising a scheduling request.

Further particular and preferred aspects of the present invention are set out in the accompanying independent and dependent claims. It will be appreciated that features of the dependent claims may be combined with features of the independent claims in combinations other than those explicitly set out in the claims.

## REFERENCES

[1] 3GPP document RP-160671, "New SID Proposal: Study on New Radio Access Technology," NTT DOCOMO, RAN#71, Gothenburg, Sweden, 7 to 10 March 2016

[2] 3GPP document RP-172834, "Work Item on New Radio (NR) Access Technology," NTT DOCOMO, RAN#78, Lisbon, Portugal, 18 to 21 December 2017

[3] 3GPP document RP-182089, "New SID on Physical Layer Enhancements for NR Ultra-Reliable and Low Latency Communication (URLLC)," Huawei, HiSilicon, Nokia, Nokia Shanghai Bell, RAN#81, Gold Coast, Australia, 10 to 13 September 2018

[4] 3GPP document RP-190654, "Physical layer enhancements for NR ultra-reliable and low latency communication (URLLC)," Huawei, HiSilicon, RAN#89, Shenzhen, China, 18 to 21 March 2019

[5] Holma H. and Toskala A, "LTE for UMTS OFDMA and SC-FDMA based radio access", John Wiley and Sons, 2009

[6] 3GPP TS 38.211, "Physical channels and modulation (Release 15)", v15.6.0 (2019-06)

[7] 3GPP TS 38.212, "Multiplexing and channel coding (Release 15)", v15.6.0 (2019-06)

[8] 3GPP TS 38.213, "Physical layer procedures for control (Release 15)", v15.6.0 (2019-06)

[9] 3GPP TS 38.331, "Radio Resource Control (RRC) protocol specification (Release 15)" , v15.5.1 (2019-04)

## Claims

1. A method of operating a terminal device in a wireless telecommunications system, the method comprising:

   determining first uplink control information should be transmitted using a first set of radio resources;
   determining the first uplink control information is associated with a first priority level;
   determining second uplink control information should be transmitted using a second set of radio resources;
   determining the second uplink control information is associated with a second priority level;
   determining if there is an overlap between the first and second sets of radio resources, and, in response to determining there is an overlap between the first and second sets of radio resources, selectively multiplexing the first uplink control information and the second uplink control information by taking account of their respective priority levels;

selecting a set of radio resources to use for transmitting the selectively multiplexed first uplink control information and the second uplink control information; and

transmitting the selectively multiplexed first uplink control information and the second uplink control information using the selected set of radio resources;

wherein the selected set of radio resources to use for transmitting the selectively multiplexed first uplink control information and the second uplink control information is a selected one of the first set of radio resources and the second set of radio resources.

2. The method of claim 1, wherein the selected one of the first set of radio resources and the second set of radio resources is the one which finishes earliest in time.

3. The method of claim 1, wherein the selected one of the first set of radio resources and the second set of radio resources is the one which would result in the multiplexed first uplink control information and second uplink control information being transmitted with the lowest code rate.

4. The method of any of claims 1 to 3, wherein the multiplexed first uplink control information and second uplink control information are transmitted using a transmission format selected to match that associated with the one of the first set of radio resources and the second set of radio resources which results in the multiplexed first uplink control information and second uplink control information being transmitted with the lowest code rate.

5. The method of any of claims 1 to 4, wherein the first priority level is determined from the first set of radio resources and / or the second priority level is determined from the second set of radio resources.

6. The method of any of claims 1 to 5, further comprising determining a maximum allowable code rate for the first uplink control information and determining the first priority level from the maximum allowable code rate for the first uplink control information and / or determining a maximum allowable code rate for the second uplink control information and determining the second priority level from the maximum allowable code rate for the second uplink control information.

7. The method of any of claims 1 to 6, further comprising:

determining third uplink control information should be transmitted using a third set of radio resources;

determining there is an overlap between the first and third sets of radio resources as well as an overlap between the first and second sets of radio resources, and wherein the second set of radio resources is the one of the second set of radio resources and third set of radio resources that is earliest in time.

8. The method of any of claims 1 to 7, further comprising:

determining third uplink control information should be transmitted using a third set of radio resources;

determining if there is an overlap between the first and third sets of radio resources as well as an overlap between the first and second sets of radio resources, and

in response to determining there is an overlap between the first and second sets of radio resources and between the first and third sets of radio resources, selectively multiplexing the first uplink control information and the third uplink control information;

selecting a set of radio resources to use for transmitting the selectively multiplexed first uplink control information and the third uplink control information; and

transmitting the selectively multiplexed first uplink control information and the third uplink control information using the selected set of radio resources.

9. The method of any of claims 1 to 8, wherein selectively multiplexing the first uplink control information and the second uplink control information comprises dropping and / or compressing some of the information bits of whichever of the first and second uplink control information is associated with the lowest priority level prior to multiplexing.

10. A terminal device for use in a wireless telecommunication system, wherein the terminal device comprises controller circuitry and transceiver circuitry configured to operate together such that the terminal device is operable to:

determine first uplink control information should be transmitted using a first set of radio resources;

determine the first uplink control information is associated with a first priority level;

determine second uplink control information should be transmitted using a second set of radio resources;

determine the second uplink control information is associated with a second priority level;

determine if there is an overlap between the first and second sets of radio resources, and, in response to determining there is an overlap between the first and second sets of radio resources, selectively multiplex the first uplink control information and the second uplink control information by taking account of their respective priority levels;

select a set of radio resources to use for transmitting the selectively multiplexed first uplink control information and the second uplink control information; and

transmit the selectively multiplexed first uplink control information and the second uplink control information using the selected set of radio resources;

wherein the selected set of radio resources to use for transmitting the selectively multiplexed first uplink control information and the second uplink control information is a selected one of the first set of radio resources and the second set of radio resources.

11. Circuitry for a terminal device for use in a wireless telecommunication system, wherein the circuitry comprises controller circuitry and transceiver circuitry configured to operate together such that the circuitry is operable to cause the terminal device to:

determine first uplink control information should be transmitted using a first set of radio resources;

determine the first uplink control information is associated with a first priority level;

determine second uplink control information should be transmitted using a second set of radio resources;

determine the second uplink control information is associated with a second priority level;

determine if there is an overlap between the first and second sets of radio resources, and, in response to determining there is an overlap between the first and second sets of radio resources, selectively multiplex the first uplink control information and the second uplink control information by taking account of their respective priority levels;

select a set of radio resources to use for transmitting the selectively multiplexed first uplink control information and the second uplink control information; and

transmit the selectively multiplexed first uplink control information and the second uplink control information using the selected set of radio resources

wherein the selected set of radio resources to use for transmitting the selectively multiplexed first uplink control information and the second uplink control information is a selected one of the first set of radio resources and the second set of radio resources.

12. A method of operating network infrastructure equipment in a wireless telecommunications system, the method comprising:

receiving, from a terminal device, uplink control information transmitted using uplink radio resources, wherein the uplink control information comprises acknowledgement signalling in respect of one or more previous transmissions of downlink signalling from the network infrastructure equipment to the terminal device;

determining the uplink control information indicates at least one of the one or more previous transmissions of downlink signalling from the network infrastructure equipment to the terminal device has not been successfully received by the terminal device; and, in response to this,

allocating radio resources for the terminal device to transmit uplink data in the same way as if the terminal device had sent uplink control information comprising a scheduling request.

13. The method according to claim 12, the method comprising

determining that the uplink radio resources overlap with second uplink radio resources allocated for the transmission of second uplink control information by the terminal device, wherein

the allocating the radio resources for the terminal device to transmit the uplink data is in response to the determining that the uplink radio resources overlap with the second uplink radio resources allocated for the transmission of the second uplink control information by the terminal device.

14. Network infrastructure equipment for use in a wireless telecommunication system, wherein the network infrastructure equipment comprises controller circuitry and transceiver circuitry configured to operate together such that the network infrastructure equipment is operable to:

receive, from a terminal device, uplink control information transmitted using uplink radio resources, wherein the uplink control information comprises acknowledgement signalling in respect of one or more previous transmissions of downlink signalling from the network infrastructure equipment to the terminal device;

determine the uplink control information indicates at least one of the one or more previous transmissions of downlink signalling from the network infrastructure equipment to the terminal device has not been successfully received by the terminal device; and, in response to this,

allocate radio resources for the terminal device to transmit uplink data in the same way as if the terminal device had sent uplink control information comprising a scheduling request.

15. Circuitry for network infrastructure equipment for use in a wireless telecommunication system, wherein the circuitry comprises controller circuitry and transceiver circuitry configured to operate together such that the circuitry is operable to cause the network infrastructure equipment to:

receive, from a terminal device, uplink control information transmitted using uplink radio resources, wherein the uplink control information comprises acknowledgement signalling in respect of one or more previous transmissions of downlink signalling from the network infrastructure equipment to the terminal device;

determine the uplink control information indicates at least one of the one or more previous transmissions of downlink signalling from the network infrastructure equipment to the terminal device has not been successfully received by the terminal device; and, in response to this,

allocate radio resources for the terminal device to transmit uplink data in the same way as if the terminal device had sent uplink control information comprising a scheduling request.

FIG. 1

FIG. 2

FIG. 3

| PUCCH Resource Set ID 0 Max Payload = 2 bits + SR | | |
|---|---|---|
| PUCCH Resource ID | Starting RB | PUCCH Format |
| 0 | 1 | Format 1 |
| 1 | 5 | Format 0 |
| 2 | 2 | Format 0 |
| 3 | 18 | Format 1 |
| 4 | 20 | Format 0 |
| 5 | 32 | Format 1 |
| 6 | 3 | Format 1 |
| 7 | 2 | Format 0 |

| PUCCH Resource Set ID 1 Max Payload = $N_2$ | | |
|---|---|---|
| PUCCH Resource ID | Starting RB | PUCCH Format |
| 0 | 3 | Format 3 |
| 1 | 8 | Format 2 |
| 2 | 2 | Format 3 |
| 3 | 20 | Format 4 |
| 4 | 54 | Format 4 |
| 5 | 15 | Format 2 |
| 6 | 7 | Format 3 |
| 7 | 8 | Format 3 |

| PUCCH Resource Set ID 2 Max Payload = $N_3$ | | |
|---|---|---|
| PUCCH Resource ID | Starting RB | PUCCH Format |
| 0 | 9 | Format 3 |
| 1 | 14 | Format 3 |
| 2 | 23 | Format 2 |
| 3 | 1 | Format 2 |
| 4 | 48 | Format 2 |
| 5 | 3 | Format 4 |
| 6 | 13 | Format 4 |
| 7 | 5 | Format 3 |

| PUCCH Resource Set ID 3 Max Payload = 1706 bits | | |
|---|---|---|
| PUCCH Resource ID | Starting RB | PUCCH Format |
| 0 | 10 | Format 4 |
| 1 | 25 | Format 3 |
| 2 | 32 | Format 4 |
| 3 | 1 | Format 2 |
| 4 | 17 | Format 2 |
| 5 | 44 | Format 3 |
| 6 | 32 | Format 3 |
| 7 | 28 | Format 4 |

# FIG. 4

EP 4 510 752 A2

| LCID |
|:---:|
| 2 |
| 3 |
| 4 |
| 5 |
| 6 |
| 7 |
| 8 |

| SR-ID |
|:---:|
| 0 |
| 1 |
| 2 |
| 3 |

| PUCCH Resource Set ID 0 | | |
|:---:|:---:|:---:|
| PUCCH Resource ID | Starting RB | PUCCH Format |
| 0 | 1 | Format 1 |
| 1 | 5 | Format 0 |
| 2 | 2 | Format 0 |
| 3 | 18 | Format 1 |
| 4 | 20 | Format 0 |
| 5 | 32 | Format 1 |
| 6 | 3 | Format 1 |
| 7 | 2 | Format 0 |

FIG. 5

FIG. 6

EP 4 510 752 A2

3 HARQ-ACKs
$N_{UCI}$ = 3 bits

PRI = 6

| PUCCH Resource Set ID 0<br>Max Payload = 2 bits + SR | | |
|---|---|---|
| PUCCH<br>Resource ID | Starting<br>RB | PUCCH<br>Format |
| 0 | 1 | Format 1 |
| 1 | 5 | Format 0 |
| 2 | 2 | Format 0 |
| 3 | 18 | Format 1 |
| 4 | 20 | Format 0 |
| 5 | 32 | Format 1 |
| 6 | 3 | Format 1 |
| 7 | 2 | Format 0 |

| PUCCH Resource Set ID 1<br>Max Payload = $N_2$ = 20 bits | | |
|---|---|---|
| PUCCH<br>Resource ID | Starting<br>RB | PUCCH<br>Format |
| 0 | 3 | Format 3 |
| 1 | 8 | Format 2 |
| 2 | 2 | Format 3 |
| 3 | 20 | Format 4 |
| 4 | 54 | Format 4 |
| 5 | 15 | Format 2 |
| 6 | 7 | Format 3 |
| 7 | 8 | Format 3 |

| PUCCH Resource Set ID 2<br>Max Payload = $N_3$ = 60 bits | | |
|---|---|---|
| PUCCH<br>Resource ID | Starting<br>RB | PUCCH<br>Format |
| 0 | 9 | Format 3 |
| 1 | 14 | Format 3 |
| 2 | 23 | Format 2 |
| 3 | 1 | Format 2 |
| 4 | 48 | Format 2 |
| 5 | 3 | Format 4 |
| 6 | 13 | Format 4 |
| 7 | 5 | Format 3 |

| PUCCH Resource Set ID 3<br>Max Payload = 1706 bits | | |
|---|---|---|
| PUCCH<br>Resource ID | Starting<br>RB | PUCCH<br>Format |
| 0 | 10 | Format 4 |
| 1 | 25 | Format 3 |
| 2 | 32 | Format 4 |
| 3 | 1 | Format 2 |
| 4 | 17 | Format 2 |
| 5 | 44 | Format 3 |
| 6 | 32 | Format 3 |
| 7 | 28 | Format 4 |

FIG. 7

| SR-ID |
|-------|
| 0 |
| 1 |
| 2 |
| 3 |
| 4 |
| 5 |
| 6 |
| 7 |

| Index | Positive SR-ID |
|-------|----------------|
| 0 | All Negative |
| 1 | 1 |
| 2 | 4 |
| 3 | 5 |
| 4 | 7 |

$K_{SR}+1$

FIG. 8

FIG. 9

1st PUCCH
(SR UCI)

2nd PUCCH
(HARQ-ACK UCI)

Slot $n$

Slot $n+1$

Selected

$m$

$m+1$

$m+2$

$m+3$

Time

$t_0$ $t_1$ $t_2$

$t_3$

Time

FIG. 10

1st PUCCH
(SR UCI)

2nd PUCCH
(HARQ-ACK UCI)

Slot $n$

Slot $n+1$

Selected

$m$

$m+1$

$m+2$

$m+3$

Time

$t_0$

$t_1$

$t_2$ $t_3$

$t_4$

Time

FIG. 11

1st PUCCH
(SR UCI)

2nd PUCCH
(HARQ-ACK UCI1)

3rd PUCCH
(HARQ-ACK UCI2)

Slot $n$

Slot $n+1$

Selected

$m$

$m+1$

$m+2$

$m+3$

Time

Time

$t_0$ $t_1$ $t_2$ $t_3$ $t_4$ $t_5$ $t_6$

FIG. 12

1st PUCCH
(SR UCI)

2nd PUCCH
(HARQ-ACK UCI1)

3rd PUCCH
(HARQ-ACK UCI2)

Slot $n$

Slot $n+1$

Selected

$m$

$m+1$

$m+2$

$m+3$

Time

Time

$t_0$ $t_1$ $t_2$ $t_3$ $t_4$ $t_5$ $t_6$

FIG. 13

1st PUCCH
(SR UCI)

2nd PUCCH
(HARQ-ACK UCI1)

3rd PUCCH
(HARQ-ACK UCI2)

Slot $n$

Slot $n+1$

Selected

$m$

$m+1$

$m+2$

$m+3$

Time

$t_0$

$t_1$ $t_2$ $t_3$

$t_4$ $t_5$

$t_6$

Time

FIG. 14

1st PUCCH
(SR UCI)

2nd PUCCH
(HARQ-ACK UCI)

3rd PUCCH
(HARQ-ACK UCI2)

Slot $n$

Slot $n+1$

Selected

$m$

$m+1$

$m+2$

$m+3$

Time

$t_0$

$t_1$ $t_2$ $t_3$

$t_4$ $t_5$

$t_6$

Time

FIG. 15

FIG. 16

1st PUCCH
(SR UCI)

2nd PUCCH
(HARQ-ACK UCI)

3rd PUCCH
(MULTIPLEX UCI)

Slot $n$    Slot $n+1$

$t_0$  $t_1$  $t_2$  $t_3$  $t_4$  $t_5$

Time

Slot $n$    Slot $n+1$

$t_0$  $t_1$  $t_2$  $t_3$  $t_4$  $t_5$

Time

FIG. 17

SR-ID

| SR-ID |
|---|
| 0 |
| 1 |
| 2 |
| 3 |
| 4 |
| 5 |
| 6 |
| 7 |

URLLC

eMBB

SILT ($K_{RS}$=4)

| Index | Positive SR-ID |
|---|---|
| | All Negative |
| 0 | |
| 1 | 1 |
| 2 | 4 |
| 3 | 5 |
| 4 | 7 |

| Group 1 |
|---|
| SR-ID1 |

$K_{SR\text{-}Reduced} = 1$

| Group 2 |
|---|
| SR-ID 4 |
| SR-ID 5 |
| SR-ID 7 |

Reduced SILT

| Index | Positive SR-ID |
|---|---|
| | All Negative |
| 0 | |
| 1 | 1 |

FIG. 18

S1 — determine first uplink control information should be transmitted using a first set of radio resources

S2 — determine the first uplink control information is associated with a first priority level

S3 — determine second uplink control information should be transmitted using a second set of radio resources

S4 — determine the second uplink control information is associated with a second priority level

S5 — determine if there is an overlap between the first and second sets of radio resources, and, in response to determining there is an overlap between the first and second sets of radio resources, selectively multiplex the first uplink control information and the second uplink control information by taking account of their respective priority levels

S6 — select a set of radio resources to use for transmitting the selectively multiplexed first uplink control information and the second uplink control information

S7 — transmit the selectively multiplexed first uplink control information and the second uplink control information using the selected set of radio resources

FIG. 19

**REFERENCES CITED IN THE DESCRIPTION**

**Non-patent literature cited in the description**

- Physical channels and modulation (Release 15). *3GPP TS 38.211*, June 2019
- Multiplexing and channel coding (Release 15). *3GPP TS 38.212*, June 2019
- Physical layer procedures for control (Release 15). *3GPP TS 38.213*, June 2019
- Radio Resource Control (RRC) protocol specification (Release 15). *3GPP TS 38.331*, April 2019
- New SID Proposal: Study on New Radio Access Technology,'' NTT DOCOMO, RAN#71. *3GPP document RP-160671*, 07 March 2016
- Work Item on New Radio (NR) Access Technology,'' NTT DOCOMO, RAN#78. *3GPP document RP-172834*, 18 December 2017
- **HUAWEI**. New SID on Physical Layer Enhancements for NR Ultra-Reliable and Low Latency Communication (URLLC). *3GPP document RP-182089*, 10 September 2018
- **HUAWEI**. Physical layer enhancements for NR ultra-reliable and low latency communication (URLLC). *3GPP document RP-190654*, 18 March 2019
- **HOLMA H.** ; **TOSKALA A**. LTE for UMTS OFDMA and SC-FDMA based radio access. John Wiley and Sons, 2009
- Multiplexing and channel coding (Release 15). *3GPP TS 38.212*, June 2016